(19)

Europäisches
Patentamt
European
Patent Office
Office européen
des brevets

(11) **EP 4 760 422 A1**

(12) **EUROPEAN PATENT APPLICATION**

(43) Date of publication:
**17.06.2026 Bulletin 2026/25**

(21) Application number: **25223646.8**

(22) Date of filing: **16.12.2025**

(51) International Patent Classification (IPC):
**G05B 19/18** (2006.01)    **B23Q 1/03** (2006.01)
**B23Q 1/44** (2006.01)    **B27C 5/06** (2006.01)
**B23Q 3/16** (2006.01)

(52) Cooperative Patent Classification (CPC):
**G05B 19/18; B27C 5/06;** G05B 2219/49127;
G05B 2219/49128; G05B 2219/49136;
G05B 2219/50183

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.12.2024 IT 202400028548**

(71) Applicant: **SCM Group S.p.A.
47921 Rimini (RN) (IT)**

(72) Inventors:
• **MONTANARI, Roberto
47921 Rimini (RN) (IT)**
• **MUCCIOLI, Gianluca
47921 Rimini (RN) (IT)**

(74) Representative: **Tiburzi, Andrea et al
Barzanò & Zanardo Roma S.p.A.
Via Piemonte 26
00187 Roma (IT)**

(54) **METHOD FOR PREDICTING THE MAINTAINING OF CLAMPING OF A WORKPIECE ON A MACHINE, AND A MACHINE PERFORMING THAT METHOD**

(57) The present invention relates to a method of predicting the maintenance of the clamping of a wooden piece (P) on a machining machine (1), which comprises tools ($U_{a,b,...,g,...,n}$) operated relative to said piece (P), and a processing unit (45). Said method comprises steps of: A. programming a machining of the piece (P); B. placing the piece (P) on support areas ($20_{a,b,...,q,...,n}$); C. obtain, from formulas and/or databases, the forces ($\underline{F}_{a,b,...,g,...,n}$) exerted by said tools on said piece (P); D. determining fictitious reactions ($\underline{T}_{a,b,...,n,...,n}$) which, exercised by re-spective reaction areas ($10_{a,b,...,h,...,n}$) selected from said areas for support ($20_{a,b,...,q,...,n}$), ensure the locking of the piece (P); E. checking whether each fictitious reaction ($\underline{T}_{a,b,...,h,...,n}$) determined, is compatible with a limit value that can be delivered by the respective reaction area ($10_{a,b,...,h,...,n}$); F. performing a machining operation on said piece (P), using said machine (1).

The present invention also relates to a processing machine (1).

Fig. 1

EP 4 760 422 A1

## Description

The present invention relates to a method for predicting the maintaining of clamping of a workpiece on a machine, and machine performing that method.

## Field of invention

More specifically, the invention concerns a method of the type mentioned above, studied and implemented in particular to predict whether the physical conditions that keep a piece blocked on a machine continue to exist during the progress of the machining, under the action of the forces that the tools exert on the piece.

The preferred type of machine on which the method can be performed is that of numerically controlled, chip-removing machine tools.

## Prior art

Machines for machining flat panels (wood, marble, glass) use horizontal work tables, either multifunctional or bar-type, with multiple clamping areas. Clamping is achieved by vacuum or mechanical clamps. The operator's experience and often software support determines the positioning of the clamping devices and the workpiece.

However, there is no formal methodology for predicting the strength of the clamp during machining: the assessment is empirical and based on intuition. The only quantitative control is the degree of vacuum, which, however, does not guarantee safety in the event of sudden stresses, with possible risks of detachment and accidents.

## Purpose of the invention

In light of the above, it is, therefore, an object of the present invention to provide a method that reduces the risk of the workpiece detaching from the work table during machining.

Another object of the invention is to provide a method that allows easy computer translation.

A further aim is to provide a method for machines which require low-cost modifications to be made suitable for performing the method.

Another further object of the present invention is to provide the tools necessary to carry out the method.

An additional object of the present invention is to provide a method which is simple and economical to implement.

## Object of the invention

The specific object of the present invention is therefore a method as defined in claim 1.

The present invention also specifically relates to a machine for processing parts as defined in claim 13, as well as a computer program and a storage medium.

Preferred embodiments are defined in the dependent claims.

## Brief description of the figures

The present invention will now be described for illustrative but not limitative purposes, according to its preferred embodiments, with particular reference to the subsequent parts of this text and to the figures of the attached drawings, in which:

- Fig. 1 shows an overall axonometric view of a machine suitable for implementing the method according to the invention;
- Fig. 1A shows an axonometric view of the work table alone of the same machine as Fig. 1;
- Fig. 1B shows again an overall view of a machine suitable for implementing the method, similar to that of the previous figures;
- Fig. 2 shows the side-section view of a disc milling tool, used to create a groove or channel on a piece fixed with suction cups to the work table;
- Fig. 3 is an enlarged detail of the previous figure;
- Fig. 4 shows in plan, as the processing times elapse $t_1$, $t_2$, $t_3$, $t_4$, $t_5$,..., two trajectories engraved on the piece by two respective tools similar to those shown in the following Fig. 14;
- Figs. 5, 5A, 5B show the plan view, in the presence of three reaction areas;
- Fig. 6 shows a schematic axonometry of the piece P, in a general case, with a resulting vector $R_j$, applied in the generic pole $O_j$, and the resulting moment $M_j$ calculated with respect to the same pole $O_j$;
- Fig. 7 shows a schematic axonometry of the piece P, with some elementary operations on applied vectors, in particular the translation of a vector on the Oxy plane;
- Fig. 8 shows the mutual position of some straight lines in plan, with their respective associated unit vectors;
- Fig. 9 shows a plan of the piece;
- Fig. 9A shows a plan of the piece P subjected to the same resultant [R, C] of the working forces as in Fig. 9;
- Fig. 9B shows a plan of piece P where only the two reaction areas $10_a$ and $10_b$ were selected to react, with respective fictitious reactions $T_a$ e $T_b$;
- fig. 10 shows a plan of the piece P containing a geometric construction that translates the analytical procedure that occurs in the method under the name of third operation;
- fig. 11 shows a plan of the piece P and the three reaction areas selected to balance the resultant [R,C] of the working forces;
- fig. 11A shows a plan view of a configuration similar to that of Fig. 11;
- Fig. 11B shows a situation where the arrangement of the resultant [R, C] of the working forces with respect to the piece is still analogous to that of fig. 11;

- Fig. 11C shows a situation where the arrangement of the resultant [R, C] of the working forces with respect to the piece is similar to that of Fig. 11;

- Fig. 11D shows a situation where the arrangement of the resultant [R, C] of the working forces with respect to the piece is still analogous to that of Fig. 11;

- Fig. 11E shows a situation where the arrangement of the resultant [R, C] of the working forces with respect to the piece is still analogous to that of fig. 11;

- Fig. 11F shows the case where the numerical values $\alpha_8$, $b_8$, $c_8$, of the free variables $\alpha$, $\beta$, $\gamma$ are such that the fictitious reactions $T_b$ e $T_c$ they both become parallel to the central axis $\chi$;

- fig. 12 shows a plan of the piece P;

- Fig. 13 shows a situation analogous to that of Fig. 12, where however in this case the lines of action of the fictitious reactions, still by means of the free variables $\alpha$, $\beta$, and Y, are erroneously made to converge on a point Q now belonging to the central axis $\chi$, which makes the problem of calculating the reactions themselves indeterminate;

- Fig. 13A shows a vector construction relating to the uncertainty that occurs in the case of Fig. 13;

- Fig. 14 shows a technological application in which, in a given processing time $t_j$, the system of working forces on the piece has a null result; and

- Fig. 15 shows another case in which the system of working forces on the piece has a zero result.

**Detailed description**

In the various figures, similar parts will be indicated with the same numerical references.

The method of the present invention solves the problem of the prediction of the maintenance of the clamping of a piece P subjected to machining on a machine 1 based on the use of physical laws and formalized numerical calculations.

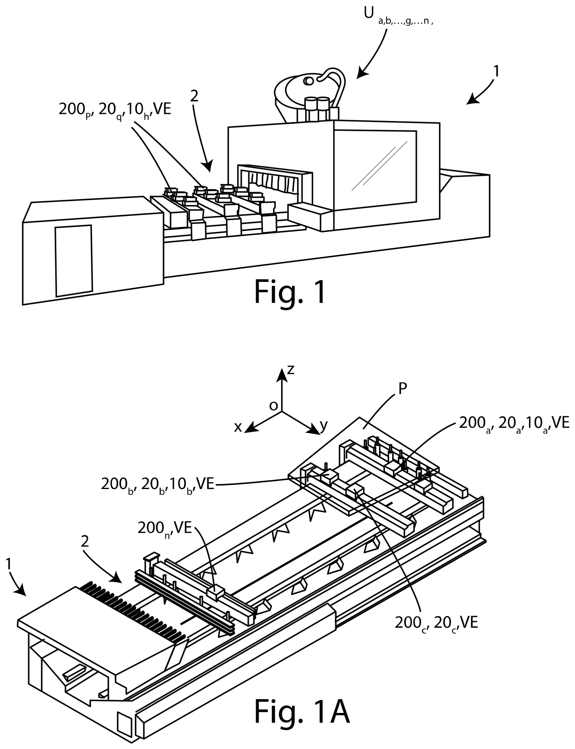

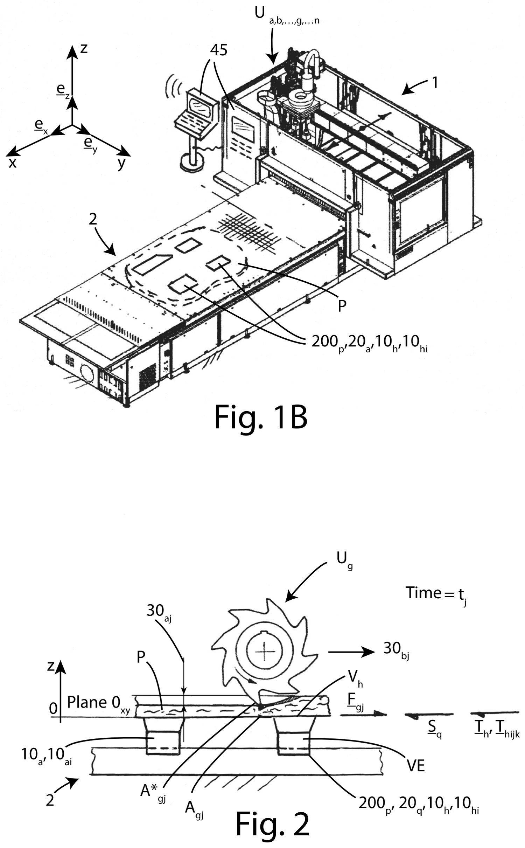

With reference to Figs. 1, 1A, and 1B, the method is implemented on a working machine 1, for example a chip-removing machine tool. These workpieces are flat plates, or at least have flat surfaces that delimit them, such that they can be supported on fixing areas $200_a$, $200_b$,...,$200_p$,...,$200_n$, briefly referred to as $200_{a,b,...,p,...,n}$. These clamping areas together constitute the work table 2, and can be parts of respective clamps, on which the clamping occurs mechanically; or they can be obtained as small perimeter zones ZP of a multifunctional work table, in which a perimeter gasket ensures vacuum sealing. In this case, a porous auxiliary panel, known as a martyr panel, can also be inserted between the workpiece and the perimeter zone. The clamping areas $200_{a,b,...,p,...,n}$ can be of the suction cup type, if the work table 2 is of the known type with movable bars. The geometric plane is assumed to coincide with the Oxy plane of a right-handed orthogonal Cartesian reference system Oxyz.

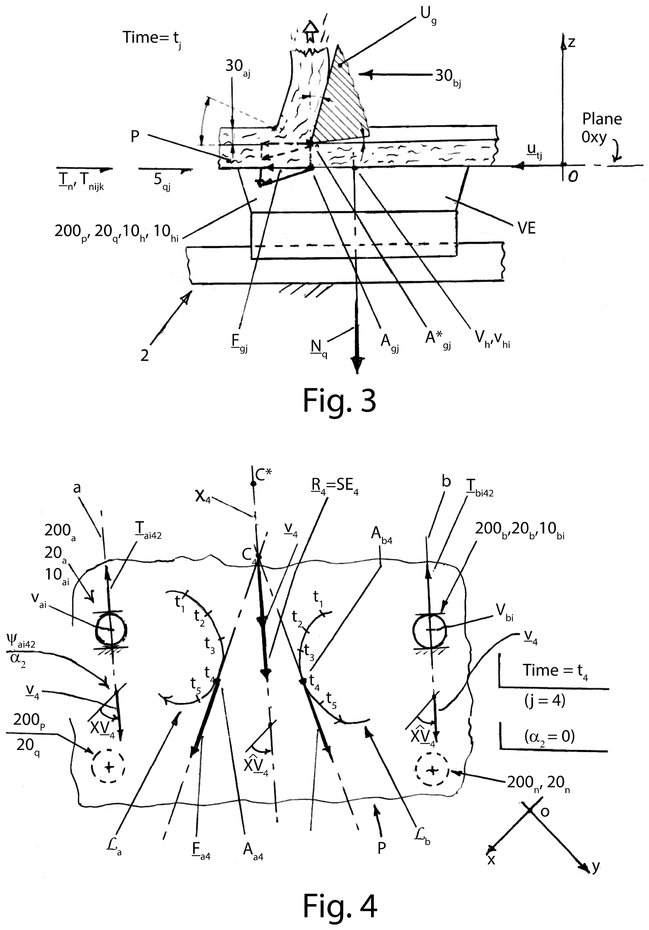

The machine 1 is equipped with one or more respective tools $U_{a,b,...,g,...n}$, capable of carrying out operations substantially similar to those illustrated in Figs. 2 and 3.

The tools, in the case considered here of a machine that works by chip removal, are driven by the machine itself according to a fast rotation motion around its own axis, which in turn is generally set in relative motion with respect to the piece P.

The working machine 1 also comprises a processing unit 45 for managing data and/or formulas and/or processing programs, as well as for controlling certain operating parameters $30_{aj,bj,...,sj,...,nj}$, according to which it is put into operation at a time $t_j$ of the machining, such as a cutting depth $30_{aj}$ of a generic tool on the piece, or a feed rate $30_{bj}$ of the same or of another tool, or similar quantities.

In some embodiments, the processing unit 45 can be interfaced with a remote peripheral unit W, configured to process and/or store data and/or codes, and to exchange the same with said processing unit 45, the latter also being able to constitute part of said remote peripheral unit W, in the sense that even if they are located in different places the two units can be functionally connected.

The programming of the processing is provided in a step A of the method, which is the object of the invention, and comprises providing a first processing program L, made available to said processing unit 45, and containing said operating parameters.

With j-th time $t_j$ of the processing, a short time interval is indicated, substantially centered on a generic instant $t_j$ of the machining of the piece P, during which the configuration variations relating to the machine, tools, operating parameters, acting forces, and the like, are very small, practically negligible.

The generic tool of said one or more tools $U_{a,b,...,g,...,n}$, is indicated here with the index "g"; the index "g", associated with an element of a multiplicity of homogeneous elements related to the tools, such as the machining forces, or their application points, indicates that this element refers to the generic tool $U_g$. This index convention is also used for multiple indexes.

Tools $U_{a,b,...,g,...,n}$ interact with the piece P, transmitting a generic working force $F_{gj}$, function of time $t_j$ and operating parameters $30_{a,b,...,s,...,n}$. The action of said labor force $F_{gj}$ is applied on a real contact point $A^*_{gj}$.

The point of real contact $A^*_{gj}$ is physically located at a non-zero height z, where the contact between tool and workpiece actually takes place, therefore slightly above the geometric plane Oxy to which belong the fixing areas $200_{a,b,...,p,...,n}$ of the machine. However, given the typically reduced thickness of the workpieces, no appreciable errors are made.

The line of action of the horizontal work force $F_{gj}$, which is exercised at said point of action $A_{gj}$, belongs to said Oxy plane, as shown in Figs. 2 and 3.

The position, the relative movement of the tool axis $U_g$ with respect to the piece P, and its rotational motion, at time $t_j$, around its own axis, determine the direction and sense of the working force $F_{gj}$, understood as a free vector, which immediately becomes an applied vector as soon as the contact point $A_{gj}$ is assigned between tool and piece, understood as the point of action of the force $F_{gj}$. As stated above, the generic vector $F_{gj}$ belongs to the Oxy plan.

The coordinates of the generic action point $A_{gj}$ in the Oxyz reference of the machine, are known to the processing unit 45. The intensity of the aforementioned generic working force $F_{gj}$, is obtained from a database, and/or from known formulas.

Referring to Fig. 3, at a j-th time $t_j$, the generic force $F_{gj}$ is identified by a unit vector $u_{gj}$ conduit for action point $A_{gj}$ where it is applied, and is shown in Fig. 3 as a vector lying on a given line of the Oxy plane.

The active forces acting on the piece P at each generic time $t_j$ of the processing, are the one or more labor forces $F_{aj,bj,...,gj,...,nj}$ applied at the respective action points $A_{aj,bj,...,gj,...,nj}$, which are all considered to lie on the Oxy plane.

As time passes, see Fig. 4, the same generic tool $U_g$ will act on the piece itself generally according to a succession of points, to form a continuous line $L_g$, which is therefore the dotted line described by the action points $A_{g1}, A_{g2},...,A_{gj},...,A_{gn}$, that is, the line of the successive contact points of the generic tool $U_g$ with the piece P, in succession of the times $t_1, t_2,...,t_j,...,t_n$ during processing. Fig. 4 shows the two cutting lines $L_a$ and $L_b$ followed by tools $U_a$ and $U_b$ as the processing times progress.

In the programming step A, the processing unit 45 is informed of the dimensions of a piece of geometry already established by similarity, for example a rectangle, which also determines which areas to support $20_{a,b,...,q,...,n}$, between the different fixing areas $200_{a,b,...,p,...,n}$ present in the machine, the piece P is placed, actually or virtually.

In the method, the step of placing the piece in the machine is called placing step B, and in practice it represents the step of selecting the areas for support $20_{a,b,...,q,...,n}$, chosen from the fixing areas $200_{a,b,...,p,...,n}$ present in the machine, based on criteria of non-interference between working tools, whose trajectories are known, and the same fixing areas $200_{a,b,...,p,...,n}$.

Step B includes a sub-step B1, to generate appropriate clamping forces $N_{a,b,...,q,...,n}$, each one pertaining to a respective support area $20_{a,b,...,q,...,n}$. An energy source SG, in particular a source of depression in the case where VE suction cups constitute the support areas $20_{a,b,...,q,...,n}$, provides for the generation of these forces. Normally the value of this depression is adjustable, for the support areas $20_{a,b,...,q,...,n}$.

A further step, called acquisition step C, involves the acquisition - by the processing unit 45 - of the forces $F_{a,b,...,g,...,n}$ exerted by the tools on the piece, as well as their respective action points $A_{a,b,...,g,...,n}$.

For the whole workforce $F_{a,b,...,g,...,n}$, considered as arranged at time $t_j$, the notation $F_{aj,bj,...,gj,...,nj}$, will also be used here, with the name of j-th arrangement of the same forces, meaning by this the same working forces, as they appear at time $t_j$.

The piece P, always in a virtual way, that is through the calculations that take place according to the present method in the processing unit 45, is loaded with the vector system $F_{aj,bj,...,gj,...,nj}$ applied at their respective application points $A_{aj,bj,...,gj,...,nj}$; that is, to obtain simpler calculations, it is loaded with the so-called minimal equivalent system $SE_j$, obtained with known algorithms, using the processing unit 45.

Step D of determining provides virtually, by means of the processing unit 45 and without the tools actually working on the piece, for the determination of a set of fictitious reactions, here generically indicated as $T_{a,b,...,h,...,n}$, to be applied tangentially on respective reaction areas, selected according to substep D1 in an i-th combination $10_{ai,bi,...,hi,...,ni}$ among the various ones obtainable with the support areas $20_{a,b,...,q,...,n}$ on which piece P was virtually placed in step B.

The fictitious reactions $T_{a,b,...,h,...,n}$, will be better indicated here also as $T_{aij,bij,...,he,...,nij}$ to highlight both their application on said reaction areas $10_{ai,bi,...,hi,...,ni}$ constituting an i-th combination just selected in substep D1 as stated above, let the dependence on time $t_j$.

In step D such fictitious reactions $T_{a,b,...,h,...,n}$, are determined to be virtually applied where indicated above, so as to constitute a system of applied vectors, the generic of which is the fictitious reaction $T_h$ applied in the reaction area $10_{hi}$, overall capable of balancing the system of forces $F_{aj,bj,...,gj,...,nj}$ exerted on the piece by the tools as a whole, at time $t_j$. The forces $F_{aj,bj,...,gj,...,nj}$, in their j-th arrangement relative to time $t_j$, and the corresponding j-th map $A_{aj,bj,...,gj,...,nj}$ action points are promptly acquired by processing unit 45 in substep D2.

In a subsequent sub-step D3 the forces $F_{aj,bj,...,gj,...,nj}$ as soon as they are acquired, they are virtually applied in the action points, also just acquired, so that the unit itself can proceed with the composition operations of the applied vectors $F_{aj,bj,...,gj,...,nj}$, and determine an equivalent j-th $SE_j$ system of those applied vectors, and hence the resulting vector $R_j$ and the resulting moment $M_j$ with respect to an assigned pole, which together reproduce the mechanical effects of the vectors $F_{aj,bj,...,gj,...,nj}$.

Due to the fact that the piece is generally overconstrained with respect to the machine, and this is due to the excessive number of constraints, the determination of said fictitious reactions $T_{aij,bij,...,he,...,nij}$ must be completed - and this in substep D4 - with the identification of one or more free variables $\alpha, \beta,...,\tau,...,\omega$, to which in substep D5 a set of arbitrary numerical values $\alpha_k, \beta_k,...,\tau_k,...,\omega_k$ is assigned, k-th among the possible ones. In fact, the same free variable, for example the direction of a straight line, can assume different values in the different steps of the method, for example in order to satisfy some limitations that the fictitious reactions $T_{a,b,...,h,...,n}$ must comply.

The arbitrary numerical valorization of the above-mentioned free variables thus determines the problem of finding said particular system of fictitious reactions, closing the balance between the few equations and the many unknowns, and allowing - in sub-step D6 - the determination of said particular system of fictitious reactions which can now, with completeness, finally be indicated as $T_{aijk,bijk,...,hijk,...,nijk}$ and that, although not representing the real reactions present in the support areas $20_{a,b,...,q,...,n}$, due to the intrinsic impossibility of their determination, however guarantees the equilibrium of said piece P on the machine, in force of:

- said the i-th combination $10_{ai,bi,...,hi,...,ni}$ of reaction areas, and
- said j-th $F_{aj,bj,...,gj,...,nj}$ arrangement of one or more working forces, respectively applied at the points of said corresponding j-th map $A_{aj,bj,...,gj,...,nj}$ of action points;
- said the k-th set $\alpha_k, \beta_{k,...}, \tau_{k,...}, \omega_k$ of arbitrary values, assigned to the remaining free variables $\alpha, \beta, ..., \tau, ..., \omega$.

The grouping *ijk* of the indices i, j, k, associated with the generic indication $T_a, T_b, ..., T_h, ..., T_n$, of fictitious reactions, identifies a particular system of them, specifying unambiguously the conditions under which the fictitious reactions $T_a, T_b, ..., T_h, ..., T_n$, have been determined. The heuristic assumption of the method can be summarized as follows:

- selected an i-th combination $10_{ai,bi,...,hi,...,ni}$ of reaction areas, and
- also acquired, substantially at the same time $t_j$ of the processing, a j-th arrangement $F_{aj,bj,...,gj,...,nj}$ of the work forces, applied at the respective action points, constituting a j-th **map** $A_{aj,bj,...,gj,...,nj}$;
- identify one or more free variables $\alpha, b, ... t ... \omega$, which in the balance of unknown equations of the problem have remained free, and whose assignment makes the problem itself determined; and assigned to them a k-th set $\alpha_k, \beta_k, ..., \tau_k, ..., \omega_k$ of plausible numerical values;

then the balance of the piece on the machine is ensured by a particular system of reactions $T_{aijk,bijk,...,hijk,...,nijk}$, even if fictitious, which satisfy the three equations of static equilibrium of the piece P with respect to the machine, and which are assumed to act, in the relative time $t_j$ of the processing, to ensure the balance of the piece P, instead of the actual adhesion reactions $S_{aj,bj,...,qj,...,nj}$ ring roads, with which the support areas $20_{a,b,...,q,...,n}$ in their centers of gravity $V_{a,b,...,q,...,n}$ they actually react to the stresses exerted by the tools on the piece P, at time $t_j$. Of course, each of the fictitious reactions $T_{aijk,bijk,...,hijk,...,nijk}$ once determined in this way, it will then have to be subjected to comparison with a relative intensity limit value, to verify that the adhesion and the clamping force relating to each of the corresponding reaction areas $10_{ai,bi,...,hi,...,ni}$ are actually able to sustain the value determined for the fictitious reaction.

Each reaction region can respond isotropically to tool stresses in the Oxy plane, allowing the selection and evaluation of free variables (e.g., $\alpha, \beta, \tau, \omega$) needed to determine the fictitious reaction system that equilibrates the workpiece during machining. If two reaction regions are selected, the problem is reduced to four scalar unknowns, but with three equilibrium equations, only one free variable remains to be assigned. Expressing the reactions in polar coordinates, the free variable can be chosen to be $\tau = \|T_{aijk}\|$ of the reaction on one of the areas, while the other unknowns are determined by the equilibrium equations.

On the Oxy plane, the origin of the rotations from which to compute the anomaly $\varphi_{hijk}$ in a counterclockwise direction of the generic fictitious reaction $T_{hijk}$ at a given processing time $t_j$, is the positive direction of the x-axis. Sometimes, due to the geometry of the problem, the generic fictitious reaction $T_{hijk}$ necessarily turns parallel to the unit vector $v_j$ of the central axis $\chi_j$, when the latter is defined; then, conveniently, the relative anomaly is made the sum of two terms, by setting ($\varphi_{hijk}=(xv_j+\Psi_{hijk})$, these $xv_j$ is a fixed addend for all time $t_j$, while the addend $\psi_{hijk}$ is computed in a counterclockwise direction starting from the positive direction of the unit vector $v_j$ of the central axis $\chi_j$. As better explained below, the addend $\Psi_{hijk}$ it can also be assumed as a free variable.

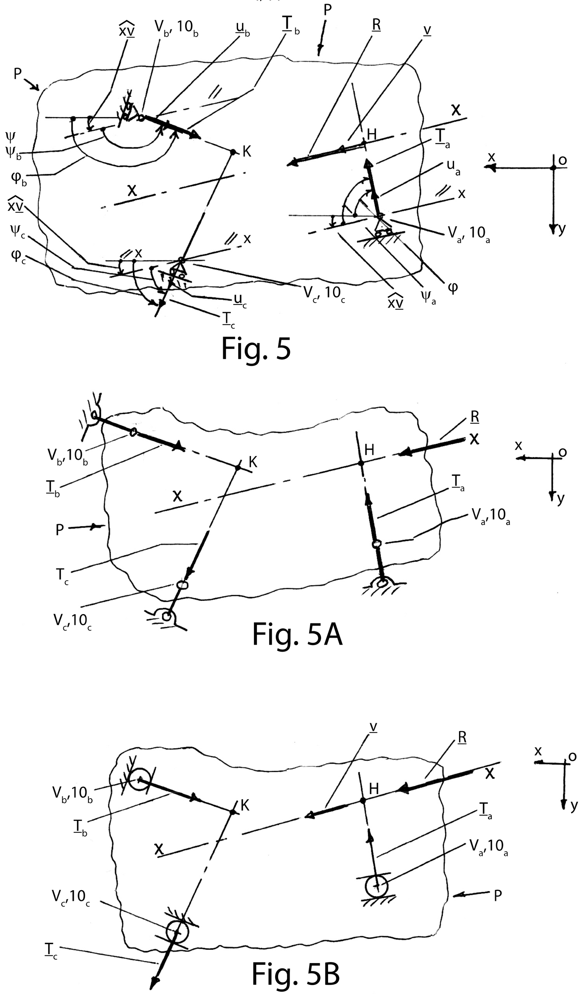

With reference to fig. 5, 5A, 5B, some particular choices for the free variables are shown, which do not make it easy to visualize which constraint modality the piece is subjected to, if not after obtaining the particular system of fictitious reactions $T_{aijk,bijk,...,hijk,...,n_{ijk}}$.

In the trolley-type constraint, Fig. 5, which must always be considered to have bilateral action, the direction of totally prohibited displacement that characterizes it coincides with the freely chosen direction $\alpha$, while the direction of free displacement of this constraint is the direction of the Oxy plane normal to the previous direction.

Another constraint that in the Oxy plane is completely equivalent to the trolley-type constraint is the connecting rod-type constraint shown in Fig. 5A. The diagram of this constraint is that of a short rod with two hinges at its ends, one of which is integral with the constrained piece, while the other is integral with the piece's support plane.

A further constraint, which in the Oxy plane is completely equivalent to both the trolley-type constraint and the connecting rod-type constraint, is the guided pin-type constraint shown in Fig. 5B, the physical materialization of which presupposes its, albeit limited, vertical development.

For a given reaction area, identified as a free variable as a reaction direction in the beam for its center of gravity, the method therefore determines the reaction that occurs in that single fixed direction, which physically corresponds to determining the reaction of a trolley-type constraint placed there, in place of the reaction area, to react in the assigned direction only. For that direction, by solving the three equilibrium equations, the method then also finds the relative intensity and direction of the fictitious reaction exhibited, and attributes it to the given reaction area.

Regarding the already mentioned actual adhesion reactions $S_{aj,bj,...,qj,...,nj}$ ring roads, the generic one of which is indicated as $S_{qj}$, present on the generic area for support $20_q$ at time $t_j$, in modulus they are limited by the relative clamping forces $N_q$, according to the well-known adhesion inequality $S_{qj} \leq fN_q$, to be used for all times $t_j$, in the optimally verified hypothesis in which the action of the clamping force $N_q$ agent in the area for support $20_q$, runs out in the support area $20_q$ itself, without affecting the tightening that takes place on the remaining support areas.

The coefficient f in the adhesion inequality depends on the nature of the two flat surfaces that are in static contact, mutually clamped by the normal force $N_q$ The inequality simply expresses that the intensity $S_{qj}$ of the generic tangential adhesion reaction that is generated on said Oxy plane as a consequence of the external stresses, is included between the zero value (case of zero external stress), and the limit value $fN_q$, which can be reached in response to an increase in external stress, but cannot be exceeded. The limit value $fN_q$ has been reached for the intensity $S_{qj}$ of the generic effective tangential adhesion reaction, as the external stress increases, the constraint (the support area) is no longer able to deliver a further intensity of tangential reaction, which would be needed to maintain the equilibrium, which is therefore lost, and with it the mutual quiet of the two adhering surfaces, which finally degenerates into a sudden and dangerous detachment of the piece from the machine.

The f-value is a dimensionless number, known as the coefficient of adhesion, which ranges from 0 to 1.

The present method of checking the maintenance of the locking of the piece P, therefore does not search for - and cannot calculate - the actual adhesion reactions $S_{\cdot aj,bj,...,qj,...,nj}$ ring roads that originate on the support areas $20_{a,b,...,q,...,n}$ as a result of the application of the labor forces $F_{aj,bj,...,gj,...,nj}$ exerted by the tools on the piece at time $t_j$, but rather checks whether, for each time $t_j$ of the processing, and after selecting a combination $10_{ai,bi,...,hi,...,ni}$- called i-th among the possible ones and formed by at least two reaction areas, as a subset of the plurality of support areas $20_{a,b,...,q,...,n}$-there is a particular system of fictitious reactions $T_{aijk,bijk,...,hijk,...,nijk}$ **which,** applied only in the reaction areas $10_{ai,bi,...,hi,...,ni}$ thus selected, balances the system of working forces $F_{aj,bj,...,gj,...,nj}$ exerted on the piece in the same processing time $t_j$. This of course, after having assigned appropriate numerical values to the remaining free variables, necessary to determine said fictitious reactions $T_{a,b,...,h,...n}$ which virtually ensure the piece remains still on the machine.

In the selection substep D1, a substep D1.1 is introduced, which involves selecting a reduced number of reaction areas, i.e. an i-th combination ($10_{ai,bi}$) of only two reaction areas, selected from the possible simple combinations of class two of said plurality of areas for support $20_{a,b,...,q,...,n}$; or an i-th combination $10_{ai,bi,ci}$ of only three reaction areas, selected from the possible simple combinations of class three of said plurality of areas for support $20_{a,b,...,q,...,n}$.

The method then provides a step G of repeatedly implementing one or more of the steps D1, D2, D3, D4, D5, D6, and any related sub-steps, within the processing unit 45, i.e. in a virtual manner. Repeated implementations take place, in particular, to follow the sequence of times $t_j$ of the processing, each of which generally implies changes in the other selections that affect the problem.

Repetitions occur with the same, or different, i-th combinations $10_{ai,bi,...,hi,...,ni}$ of reaction areas, and/or with the same or different j-th arrangements ($F_{aj,bj,...,gj,...,nj}$) of said one or more working forces, respectively applied at the points of the corresponding j-th maps ($A_{aj,bj,...,gj,...,nj}$) of action points, relating to different times $t_j$ of processing. Of course, repetitions can also take place with the same, rather than different, k-th sets of $\alpha_k, \beta_k,... \tau_k,... \omega_k$ **of** arbitrary values for the free variables, even if during the execution of the method it is frequent the case in which, to determine said fictitious reactions $T_{aijk,bijk,...,hijk,...,nijk}$, it is sufficient to assign a single k-th set $\alpha_k, \beta_k,... \tau_k,... \omega_k$ of arbitrary values to the variables left free from the balance between equations and unknowns, as will be exemplified later.

The adhesion inequality $S_{qj} \leq fN_q$, which can be written for the generic effective adhesion reaction $S_{qj}$ that at time $t_j$ of processing is manifested on the generic area for support $20_q$, must also be valid for the generic fictitious reaction $T_{hijk}$ which acts in the respective area by reaction $10_{hi}$, under the normal thrust $N_h$.

Let the following relation hold, also called here the limit inequality: $T_h \leq T''_h$, where $T''_h = fN_h$; being $N_h$ the clamping force that the corresponding area $10_{hi}$ can deliver. In the particular case of clamping areas that are all physically equal to each other, for example a set of VE suction cups of the same type and equally served by the vacuum network, this limit value is generally equal to the same T" value for all said physically equal reaction areas.

In step E there are the sub-steps E1 and E2, in which the method provides for a comparison between each of the calculated intensities $T_{hijk}$ for the fictitious reaction associated with the area for reaction $10_{hi}$, and the related intensity limit value $T_h"$ that the machine - by means of the clamping force $N_h$ - can support as maximum tangential value on said reaction area $10_{hi}$ (h=a,b,...,h,...,n).

The indication $T_{hi}"$ is to be understood as equivalent to the indication $T_h"$, and can specify the fact that the intensity limit value $T_h"$ is considered for the reaction area $10_h$, when this becomes part of the i-th combination $10_{ai,bi,...,hi,...,ni}$ of reaction areas, the $T_{hi}"$ values and $T_h"$ thus resulting clearly equal as they refer to the same reaction area.

In the processing unit 45, the virtual succession of processing times $t_1, t_2,...,t_j,...,t_n$, during the execution of the virtual steps of the method, some or all of the actions included in the steps of the method illustrated so far, performed for a given current condition $C_{ijk}$, are also performed for other current conditions $C_{ijk}$, resulting from different choices made over time for the index *i,* and/or the index *j,* and/or the index k, of the string *i,j,k,* and/or operating parameters $30_{a,b,...,s,...,n}$ as provided for by the steps of the method as claimed.

In particular, the above is expected to be repeatedly implemented in step G, where the method manages a multiplicity of current conditions $C_{ijk}$ the acquisition and evaluation of further current conditions, with respect to a first one that has been elaborated, can in particular take place both due to the virtual progression of the processing times along the sequence $t_1, t_2,...,t_j...,t_n$ formed by them, both within the same processing time $t_j$, when the result $T_{aijk,bijk,...,hijk,...,nijk}$ of the elaboration of a current condition $C_{ijk}$ does not meet the numerical limits $T"_{ai,bi,...,hi,...,ni}$ assigned, in the method, in step E1. In this case the calculation is repeated, as expected in step K, assuming as input entities modified in their values, as expected in step J, and identified by different indices *i,* and the *k,* and/or from different operating parameters $30_{a,b,...,s,...,n}$, in the present case considered for the same time $t_j$.

As already specified, in the processing unit 45 the sequence of operations is simulated. For example, given a j-th time $t_j$ of the scheduled machining, an i-th combination of at least two areas for reaction 10 is selected for it$_{ai,bi,...,hi,...,ni}$, let there be a k-th set $\alpha_k$, $\beta_k,...\tau_k,...,\omega_k$ of values for the free variables of the problem. The processing unit 45 also contains the values of the operating parameters $30_{a,b,...,s,...,n}$ expected by the programmer to be active at processing time $t_j$. For each current condition $C_{ijk}$- that is, for fixed indexes *i,j,k,* and therefore for the entities that belong to those indices the consequent fictitious reactions **T**$_{aijk,bijk,...,hijk,...,nijk}$ **can** be determined, with calculations that will be illustrated later; in particular, their intensities can be determined. Since they have been determined under the same current condition $C_{ijk}$, the fictitious reactions $T_{aijk,bijk,...,hijk,...,nijk}$it is said here that they constitute a particular system of them.

If now, at the fixed j-th time $t_j$ of the programmed processing the intensities of the fictitious reactions $T_{aijk,bijk,...,hijk,...,nijk}$ forming a particular system called $T_{aijk,bijk,...,hijk,...,nijk}$, as determined in force of a said i-th combination and of said j-th processing time, are less than or equal to the corresponding limit values $T"_{ai,bi,...,hi,...,ni}$ assigned to each reaction area of the i-th combination $10_{ai,bi,...,hi,...,ni}$ of current reaction areas, then the aforementioned comparison foreseen in sub-step E2 is associated with a favorable or positive outcome in mathematical or computer terms (it is understood to be "TRUE").

In other words, if it happens that at the given processing time $t_j$, and for each reaction area ($10_{hi}$) of a said i-th combination ($10_{ai,bi,...,hi,...,ni}$) of reaction areas, the related fictitious reaction ($T_{hijk}$) of this particular system is less than the limit value ($T"_{hi}$) assigned to said reaction area ($10_{hi}$), then the outcome of the aforementioned comparison referred to in sub-step E2 is defined as favorable. If, however, the above does not occur, the outcome of the comparison is defined as unfavorable.

The outcome of the comparing sub-step E2, whether favorable or not, is therefore related to the occurrence, or not, of the equilibrium of the piece P on the machine, in a given time $t_j$ of the processing.

Step H of the method is the step of applying a logical test, which evaluates the totality of the individual comparisons already carried out in step E2, each relating to a very specific time $t_{\cdot j}$ of processing.

This logical test therefore does not only evaluate what happens in the single processing time $t_j$, but rather what happens in the succession of all the processing times $t_j$; and has as its outcome the value *True,* or the value *false.*

The attribution of said true value to the outcome of the logical test takes place if, for each of the times $t_j$ of the processing, the comparison mentioned when illustrating the sub-steps E1 and E2 has a favorable outcome. In this case, according to the method, the maintenance of the equilibrium of the piece P in the time range of each of the times $t_j$ of the processing would be ensured, therefore during the entire time in which it would take place.

This is equivalent to stating that, in the virtual succession of times $t_j$ of processing, for each of said times the comparison made between each of the fictitious reactions $T_{aijk,bijk,...,hijk,...,nijk}$ is favourable relating to the respective reaction areas $10_{ai,bi,...,hi,...,ni}$, and the related intensity limit values $T"_{ai,bi,...,hi,...,ni}$ assigned to the aforementioned reaction areas in step E1; which is equivalent to stating that the piece P is in equilibrium for the entire duration of the process. In this case, the test result is assigned the value TRUE.

On the contrary, if for at least one of the processing times $t_j$ the comparison between any fictitious reaction $T_{hijk}$, relating to the generic reaction area $10_{hi}$, with the intensity limit value $T"_{hi}$ assigned in step E1 to said reaction area, IS NOT FAVORABLE, then according to the same criterion used above, the test result is assigned the value FALSE.

The step I of emitting a computer signal SI, by means of the processing unit 45, immediately follows the application of the logic test performed in step H mentioned above. In particular, when the logic test result is true, the processing unit 45 emits a signal that is conventionally called positive; while when the logic test result is false, the processing unit 45 emits a signal that is conventionally called negative.

The positive informatic signal SI is used by the method to authorize machining on the machine, while the negative signal SI is used to warn that, during the virtual execution of the method, certain limitations on the numerical values of the calculated results have not been respected, which is why the predictive calculation does not ensure the piece will remain still on the machine, according to the heuristic approach of the method. In this case, the method provides for the repetition of some calculations, using new numerical values for some of the entities entering the calculation. This takes place in the step K still to be implemented, where some of the steps already carried out previously are repeated, possibly assuming - according to the previous J step to modify - modified values for one or more of the clamping forces $N_{\cdot a,b,\dots,q,\dots,n}$, or modified values for one or more of the operating parameters $30_{aj,bj,\dots,sj,\dots,nj}$, or a different i-th combination $10_{ai,bi,\dots,hi,\dots,ni}$ of reaction areas, i.e. a different k-th set $\alpha_k, \beta_k, \dots, \tau_k, \dots, \omega_k$ of values assigned to the free variables $\alpha, \beta, \dots \tau, \dots \omega$.

If all processing times $t_j$ considered are close together in such a way that the union of their time intervals, in which the blocking has been verified to exist, constitute the entire processing time, then according to the method the blocking of the piece is ensured for the entire duration of the processing.

The existence of a particular system of fictitious reactions $T_{aijk,bijk,\dots,hijk,\dots,nijk}$ is a sufficient, but not necessary, condition for the equilibrium of the piece subjected to the working forces. The method according to the invention allows the operator to start the process, even if the test result is FALSE.

According to step I, the method provides that the processing unit 45 emits a positive or negative computer signal SI. This computer signal SI is preferably also emitted in a way that is sensorily perceptible to an operator.

A positive signal SI is to be managed at the programmer's discretion, but it can also constitute a direct consent to the processing, which can therefore be physically performed as the final step F of the method.

However, if the comparison illustrated above is not successful for any of the calculated results, the method does not ensure the equilibrium of the piece P under the external stresses acting on it in the considered current condition $C_{ijk}$, that is, for the numerical values of the entities pertaining to the chosen indices $l$ and k, at the processing time $t_j$ and in its small temporal surroundings.

In this case, still according to step I, the method requires the processing unit 45 to emit a signal, here defined as negative. This signal, at the programmer's discretion, can also be managed to inhibit the machining process, which in this case would not be physically performed as a step of the method, at least by using the numerical values of the entities currently in effect on the machine, generally coming from the first machining program L.

The emission of a negative computer signal SI in step I of the method can be corrected by executing step J of the method itself, which essentially involves the modification of one or more numerical values of the entities that pertain to the current condition $C_{\cdot ijk}$ against which the negative computer signal had been emitted in step I. The choice of new current configurations is aimed at avoiding a subsequent and further emission of a negative computer signal.

The corrective actions envisaged in step J of the method are substantially attributable to the modification of some quantities that influence one or the other member of the limit inequality $T_{hijk} \leq T_h''$, where the intensity $T_{hijk}$ of the generic fictitious reaction $T_h$ - calculated under the conditions relating to the current indices $i,j,k$, and the current operating parameters $30_{a,b,\dots,s,\dots,n}$ as clarified above - is compared with the intensity limit value $T_{hi}''$ locally permitted on the same generic reaction area $10_{hi}$ where said fictitious reaction $T_{hijk}$ acts.

So the method involves a recalculation with new numerical values, for example new values for the clamping forces $N_{a,b,\dots,q,\dots,n}$ agents in the support areas $20_{a,b,\dots,q,\dots,n}$, if the machine provides this *feature.* That is, a recalculation after modification, at processing time $t_j$, of one or more of the operating parameters $30_{aj,bj,\dots,sj,\dots,nj}$, in particular of a pass depth of $30_{aj}$ of one of the tools. Or, again, a recalculation performed with a different i-th combination of at least two reaction areas $10_{ai,bi,\dots,hi,\dots,ni}$; or with a different k-th set $\alpha_k, \beta_k, \dots, \tau_k, \dots, \omega_k$ of values assigned to the remaining free variables $\alpha, \beta, \dots \tau, \dots \omega$. The aim is to determine a particular system of fictitious reactions $T_{hijk}$, which must virtually balance the external stress produced by the working tools, in the current condition $C_{ijk}$, each of these fictitious reactions being compatible with the respective limit inequality.

Once new numerical values have been obtained for the entities being calculated - possibly by repeating step J, through modifications to the input data - the further step K is then executed. In this step, the processing unit 45 assumes the aforementioned values and/or groupings as modified in step J, and with those the processing of the previous steps is carried out again, to determine new fictitious reactions $T_{\cdot aijk,bijk,\dots,hijk,\dots,nijk}$ such as to make all the inequalities verified with the respective limit values $T''_{ai,bi,\dots,hi,,ni}$. If, with a new execution of the compare sub-step E2, all limit inequalities are successful, then the current condition $C_{ijk}$ is considered acceptable, and the modified input values related to it are stored to be recalled if necessary to complement and/or replace previous instructions already contained in the first program L, relative to the instant $t_j$ of the processing, which the configuration $C_{ijk}$ it refers.

The further implementation of steps already performed, but unfavorably delayed with respect to the limit inequality foreseen in sub-step E2 to compare, can naturally be performed several times, and for different

current conditions $C_{ijk}$, as long as for each of the processing times $t_j$, let us find one of them for which the relevant limit inequality is favorably verified, so as to finally obtain - according to step I - a positive IT signal SI, subject to which the step F of execution of the processing can be physically performed.

The processing unit 45, also virtually performed the subsequent steps of the method, and in particular the verification step E, ascertains the compatibility of the fictitious reactions $T_{a,b,...,h,...,n}$ gradually calculated by the method itself, with the predetermined limit values of intensity $T''_{a,b,...,h,...,n}$, which on the reaction areas $10_{a,b,...,h,...,n}$ are physically obtainable on the basis of the clamping forces $N_{a,b,...,q,...,n}$ agents therein. In the usual case in which all VE suction cups of the same type constitute the support areas, the limit values of intensity $T''_{a,b,...,h,...,n}$ they are to be assumed to be equal to each other.

When the compatibility of the fictitious reactions with the intensity limit values is achieved for all times processing $t_j$, possibly after reiteration of some steps of the method, step L takes place which involves storing, as suitable parameters, the numerical values of the entities that led to the emission of a positive signal. These numerical values are those present in the processing unit 45 when the positive signal is emitted. Subsequently, the same processing unit 45 issues update instructions AG which, in parallel or in substitution of corresponding instructions present in the first program L, guide the final step F of actual execution of the processing on the piece P which, based on everything seen above, will take place safely with respect to the detachment of the piece.

The update instructions AG, if issued, are used to complement and/or replace the instructions contained in the first machining program L, to actually execute said final machining step F, thus ensuring that the workpiece is maintained in place.

Since the static equilibrium of the piece on the machine is a condition that must exist instant by instant, the method which is the object of the present invention, in its preferred embodiment described here, provides that the analysis of the machining is conducted with reference to the individual times processing $t_j$, in succession, which correspond to as many current conditions $C_{ijk}$ of physical/geometric/kinematic entities, and of tools, with respect to the piece.

Machine 1 on which the method is applied is a machine for working pieces in wood, glass, marble, plastic, metal or composite materials, which has $200_{a,b,...,p,...,n}$ fixing areas on which the piece is locked, by means of respective clamping forces $N_{a,b,...,q,...,n}$ dispensed by the machine itself.

The machine includes, as mentioned, one or more tools $U_{a,b,...,g,...,n}$ The processing unit 45 is configured to perform the steps of the method as previously described, and as further claimed.

The fixing areas $200_{a,b,...,p,...,n}$ of machine 1 may include a mechanical clamping device, of the clamp or presser type.

Said fixing areas $200_{a,b,...,p,...,n}$ of the machine 1, may comprise one or more suction cups VE, and/or at least one multifunctional work surface area ZP surrounded by a gasket. These areas are powered by an energy source (SG) capable of generating a vacuum, which can be modified to obtain different clamping forces $N_{a,b,...,q,...,n}$.

The total workforce $F_{aj,bj,...,gj,...,nj}$ applied by the tools to the piece P at the action points $A_{aj,bj,...,gj,...,nj}$, at time processing $t_j$, is also indicated as the set of applied vectors, the generic of which, g-th, is $[F_{gj},A_{gj}]$.

At the generic time processing $t_j$, in the physical reality of the phenomenon, said set is balanced by the actual adhesion reactions $S_{aj,bj,...,qj,...,nj}$ ring roads, provided by the support areas $20_{a,b,...,q,...,n}$, by virtue of the normal clamping forces $N_{a,b,...,q,...,n}$.

The generic $S_{qj}$ of said effective tangential adhesion reactions, acts at point $V_q$ of the area $20_q$, which can be approximated by its center of gravity, and is also indicated as the applied vector $[S_{qj},V_q]$.

By well-known rules of statics, if at processing time $t_j$, to the system of forces $F_{aj,bj,...,gj,...,nj}$, applied in said points $A_{aj,bj,...,gj,...,nj}$, a different system of forces is substituted $SE_j$, whose vectors are also applied at points of the piece P, then the same effective tangential adhesion reactions $S_{aj,bj,...,qj,...,nj}$ applied in the same points $V_{a,b,...,q,...,n}$, and that at time $t_j$ ensured the equilibrium of the piece P under the action of the system of forces $F_{aj,bj,...,gj,...,nj}$, could equally be evoked by said different system of forces $SE_j$, and ensure the balance of the piece subjected to said system of forces $SE_j$.

The force system $SE_j$ is equivalent to the system of said vectors $F_{aj,bj,...,gj,...,nj}$ that, at the same processing time $t_j$, are applied at points $A_{aj,bj,...,gj,...,nj}$.

At processing time $t_j$, the calculation of a system of forces $SE_j$ equivalent to the given labor force system $[F_{gj},A_{gj}]$ applied, especially for work force systems, in which the number of said applied vectors is high, is advantageously performed using a dedicated routine. For work force systems where the number of vectors is small, a force system $SE_j$ equivalent to the given labor force system $[F_{gj},A_{gj}]$ applied, can also be obtained by operating directly, only with the known elementary rules of composition between applied vectors.

Below, the sequence of steps and calculations that constitute a dedicated routine of the above-mentioned type is shown, to easily find, in any case, a system of forces $SE_j$ equivalent to the system of working forces applied on the piece at processing time $t_j$.

The above-mentioned dedicated routine constitutes a first block of calculations, and contains the main formulas which in the present method are sufficient to compose the working forces **F** $_{aj,bj,...,gj,...,nj}$ together, applied at action points $A_{aj,bj,...,gj,...,nj}$ of the piece P, at the generic processing time $t_j$. Using this routine, it is very easy to obtain a system of $SE_j$ forces equivalent to the given system of vectors $F_{aj,bj,...,gj,...,nj}$ **applied,** which in the case of the technical problem to which this method is a solution, is also composed of the smallest possible number of vectors.

The analytical formulas preferred by the present method to implement, at a generic time $t_j$ of the processing, the above routine dedicated to the search for an equivalent system $SE_j$ to the given system of vectors $F_{aj,bj,...,gj,...,nj}$, applied at points $A_{aj,bj,...,gj,...,nj}$ of the piece P, express the following parameters, which here are indicated as affected by the subscrip $tj$ as they specifically refer to the generic j-th time $t_j$ of the processing:

- the resulting vector $R_j = \Sigma_g F_{gj}$, (g=a,b,...,g,...,n); is a free vector, obtained as the vector sum of the freed vectors $F_{aj,bj,...,gj,...,nj}$, after having brought them with their respective first extreme to a common point (for example the origin O of the reference system Oxyz);
- the resulting moment $M_j = \Sigma_g M_{gj}$, (g=a,b,...,g,...,n); is a free vector, obtained as the sum of the free vectors $M_{gj} = F_{gj} {}^\wedge (O_j - A_{gj})$ (g=a,b,...g,...,n), after having brought them with their respective first extreme to a common point; the generic free vector of the type $M_{gj}$ representing the moment of the generic single vector $F_{gj}$ applied at the respective point $A_{gj}$, calculated with respect to a given common pole $O_j$.

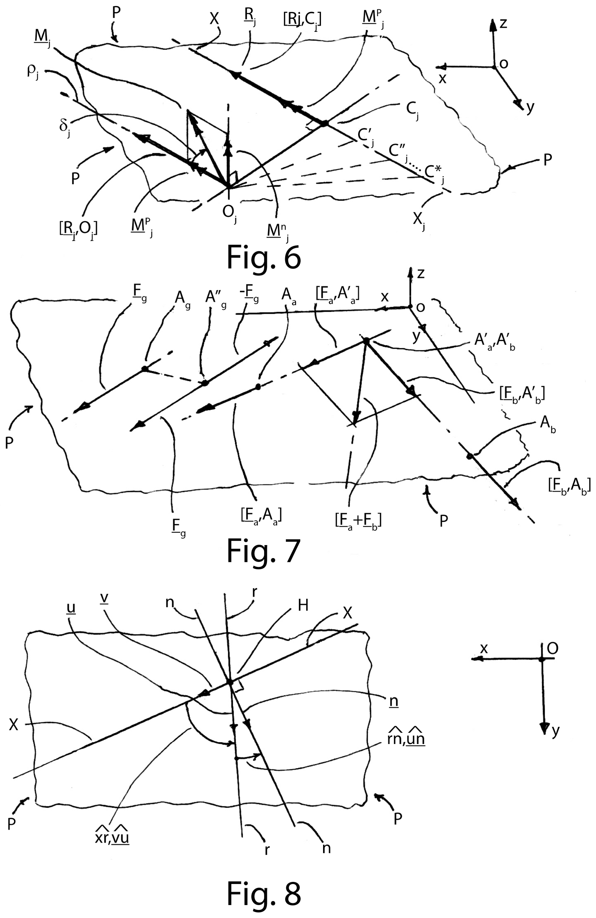

As an example, Fig. 6 shows some generic vector operations useful in the solution under consideration, in which the resultant $R_j$ is not zero considering the vectors $R_j$ ed $M_j$ both with their first ends at a chosen pole $O_j$, so they identify a plane in which the vector $M_j$ is always decomposable along the line of the same vector $R_j$, and along the normal to this, conducted through $O_j$; in this way the vector $M_j$ is obtained decomposed down into the following sum of free vectors, as in said fig. 6: $M_j = M_j{}^p + M_j{}^n$, in which the apex $p$ at the first term of the sum, or respectively the apex n in the second term, identify the component of $M_j$ parallel, or respectively normal, to the vector $R_j$, on said considered plane.

The central axis $x_j$ of the given system of applied vectors is then defined as the locus of poles $C_j$, for which, at processing time $t_j$, there is $M_j = M_j{}^p$ namely, for which the resulting moment $M_j$ reduces to the vector $M_j{}^p$ alone parallel to the resulting vector $R_j$. It can be proven that this locus is a straight line $\chi_j$ parallel to the resulting vector $R_j$.

Elementary operations on vectors are illustrated in fig. 7 where for brevity the subscript j has been omitted, which a technician in the field will be able to easily understand. In the cases of interest of this method, the operations are particularly simple since the vectors of the system are coplanar, and all belong to the Oxy plane.

In the cases of interest of the present method, the primitive system of working forces applied by the tools on the piece, for each processing time $t_j$, can be replaced for all purposes by the resulting $R_j$ of said system (if not zero), applied at any point C* of the central axis $\chi_j$, as determined above; or, if said resultant is zero, the given system can be replaced by any pair of forces that repro-

duces the resulting moment $M_j$ of the system. In the processing unit 45, simple instructions are implemented, essentially based on the test $R_j = 0$, which makes it possible to distinguish the two cases from each other.

In relation to the method object of the invention, the applied vectors $F_{aj,bj,...,gj,...,nj}$ of the given system are all spread out on the Oxy plane, it turns out that the resulting vector $R_j$ is in any case orthogonal to the resulting moment $M_j$, so - being $\cos\vartheta_j = 0$ - the above constant is zero, and therefore in any case it will result $M_j{}^p = 0$. This, combined with the property of the points C* of the central axis assumed as poles, for which it has been seen that $M_j{}^n = 0$, allows concluding that, assuming said points C* as poles, overall we have $M_j = 0$, where the given system is equivalent to the resultant $R_j$ only, applied at a point C* of the central axis $\chi_j$.

When it occurs - as in the case seen above - that a given system of applied forces is equivalent only to the resultant vector $R_j$, applied at a suitable point C, said resulting vector $R_j$ applied at said appropriate point $C_j$ is called *the resultant* $[R_j, C_j]$ of the system of applied forces.

In symbols, we have the following system $SE_j$ composed of a single vector $R_j$ appropriately applied on the central axis

$\{[R_j, C_j{}^*], M_j = M_j{}^p = 0\}$, that is, only $\{[R_j, C_j{}^*]\}$ it is a system equivalent to the given system of applied vectors, since it has the same resulting vector $R_j$, and the same resulting moment $M_j = M_j{}^p = M_j{}^n = 0$ with respect to pole $C_j{}^*$.

The above applies in the cases to which this method refers, where the resulting $R_j$ is not zero of the given vector system.

This means that, in the vast majority of cases of interest to the present method, the given system of applied forces can be replaced, as far as the equilibrium of the piece P itself is concerned, by the resultant $R_j$ of the given vector system, applied at a point $C_j$ of the central axis $\chi_j$, identified by the formula $(C_j - O) = R_j{}^\wedge (M_j)/R^2{}_j + (O_j - O)$ already given previously, and also assumed as a pole, instead of the pole $O_j$.

In the remaining cases of interest to the method, where the resulting $R_j$ is zero, the given vector system is equivalent to a pure torque of moment equal to the resulting moment $M_j$ of the given system, as will be discussed in greater detail below.

If the system of applied vectors consists of the work forces $F_{aj,bj,...,gj,...,nj}$ have resultant $R_j = 0$, and therefore also $I_j = 0$, then the central axis $\chi_j$ is no longer defined, and likewise the decomposition of $M_j$ no longer makes sense along the direction of $R_j$, the latter not existing. In this case, choosing any pole $O_j$, the given system of applied vectors is equivalent to a free vector of momentum equal to the resulting momentum $M_j$ of the system, which is physically materialized by any pair of forces $[\varphi_j, A_j] [-\varphi_j, B_j]$ of moment equal to $M_j$, that is, such that $M_j = (A_j - B_j){}^\wedge \phi_j$.

In the calculations necessary to implement this method, it is useful to consider a generic free unit vector $u_{gj}$ to identify the direction of the respective generic force

$F_{gj}$ of the system of forces acting at time $t_j$, so that we can write $F_{gj}=F_{gj}u_{gj}$, where for the operations it may be convenient to assume the unit vector $u_{gj}$ consistent with the force vector $F_{gj}$, so that it results in $F_{gj}> 0$. Similarly, it is useful to consider a free unit vector $v_j$ in the direction of the resulting vector $R_j$ of the system of forces acting at time $t_j$, such that we can write $R_j=R_jv_j$, where for the operations it may be convenient to assume that the unit vector $v_j$ agrees with the resulting $R_j$, so that $R_j > 0$.

Finally, called $e_z$ the unit vector of the z-axis of the given reference system Oxyz, since all the individual moments $M_{gj}$ have the direction of the z-axis (equiverse or contrary to it), for the generic one of them we can put: $M_{gj} = M_{gj}e_z$, and therefore also $M_j = M_je_z$, here with $M_{gj}$ and/or $M_j$ independently $\geq 0$, or $\leq 0$.

The processing unit 45, knowing the action points $A_{aj,bj,...,gj,...,nj}$ of the tools on the workpiece, the orientation of the tools themselves, and the operating parameters $30_{aj,bj,...,sj,...,nj}$ associated with the processing, contains all the elements necessary to determine, for each processing time $t_j$, all the generic quantities relating to said time $t_j$:
$F_{gj}$, $u_{gj}$, $R_j$, $v_j$, $M_{gj}$, $M_{j,}$.

In detail, each of the generic quantities mentioned is obtained as follows:

$F_{gj}$ is obtained from the Mechanical Technology formulas implemented in the processing unit 45, referring to the tool typology $U_g$, working according to said operating parameters $30_{aj,bj,...,sj,...,nj}$;

$u_{gj}$ is obtained from the orientation of the tool $U_g$, and from the directions and intensities of its cutting and feed speeds;

$R_j$ is obtained from the vector sum of the vectors $F_{gj}$ set free;

$v_j$ is obtained from the orientation and direction of the vector $R_j$;

$M_{gj}$ is obtained as the moment of the single applied force $F_{gj}\wedge(O_j-A_{gj})$ (g=a,b,....g,...,n), applied at the respective point $A_{gj}$, and calculated with respect to a given pole common $O_j$, conveniently taken on the Oxy plan;

$M_j$ it is obtained as the sum of the free vectors $M_{gj} = F_{gj}\wedge(O_j-A_{gj})$ (g=a,b....g,...,n), after having brought them with their respective first extreme to a common point; the generic free vector of the type $M_{gj}$ representing the moment of the generic single vector $F_{gj}$, applied at the respective point $A_{gj}$, and calculated with respect to a given common pole $O_j$; $e_z$ is the unit vector of the z-axis of the chosen Oxyz reference system.

With reference to figs. 6 and 7, it is added here that the same $\chi_j$ axis could also be identified in an elementary way, in particular only graphically, simply by composing two by two, in any succession, the applied vectors $[F_{also},A_{also}]$, $[F_{bj}, A_{bj}]$,...., $[F_{gj},A_{gj}]$,...,$[F_{nj}, A_{nj}]$ of

the given system, and making exclusive use of the aforementioned elementary operations.

In this way, there is not even the need to resort to a pole to calculate the moments, since these manifest themselves spontaneously as pure transport couples, as they are eventually added to the system to translate a vector, when this becomes necessary to bring it into contact with another vector, and therefore be able to perform the sum of the two with the parallelogram.

Having determined graphically the line of action $\rho_j$ in this way, according to which the last vector obtained from this composition expires, which is the resultant $R_j$, the sum of all the transport torques added one after the other is considered, which is equivalent to a resulting moment $M_j$, which as already seen can be broken down into

$$M_j = M_j^p + M_j^n.$$

Then the central axis $\chi_j$ is obtained by translating, on a plane normal to the vector $M_j^n$, the straight line $\rho_j$ of a quota such that the vector $R_j$, lying on the straight line $\chi_j$ thus obtained, reproduce the moment $M_j^n$ with respect to any pole $O_j$ taken on the straight line $\rho_j$.

The synthesis of all forces exerted by the tools on the workpiece has been illustrated as the first part of this method and, at a given processing time $t_j$, provided a system of $SE_j$ vectors equivalent to them, consisting of a single force - the resultant $[R_j,C^*]$ applied at any point $C^*$ on the central axis $\chi_j$- or consisting of a single moment $M_j$, the latter being able to be materialized by a pair of applied forces, lying in a plane normal to the vector $M_j$, which in the case of this method is the Oxy plane.

A second and subsequent part of the present method has as its aim the determination of a particular system of fictitious reactions $T_{aijk,bijk,...,hijk,...,nijk}$, already mentioned above, applying which in the centers of gravity $V_{ai,bi,...,hi,...,ni}$ of a corresponding i-th combination $10_{ai,bi,...,hi,...,ni}$ of reaction areas, the piece P is virtually equilibrated at the processing time $t_j$, while it is subject to the aforementioned system of forces $SE_j$, equivalent to the labor force system $F_{aj,bj,...,gj,...,nj}$ actually exerted by the tools on the piece at their respective action points $A_{aj,bj,...,gj,...,nj}$.

In other words, for each processing time $t_j$ the method first provides for the synthesis of the forces acting on the piece, calculating the equivalent force system $SE_j$ as written above, and subsequently provides for the virtual distribution of that stress on an i-th combination of reaction areas $10_{ai,bi,...,hi,...,ni}$, taken as a subset of the support areas $20_{a,b,...,q,...,n}$ on which the piece lies.

To be placed on said reaction areas $10_{ai,bi,...,hi,...,ni}$, to balance the equivalent system of forces $SE_j$ agent at the processing time $t_j$, the following second part of the method teaches how to determine respective fictitious reactions $T_{aijk,bijk,...,hijk,...,nijk}$ which form said particular system.

As already widely illustrated, said equivalent system of forces $SE_j$, in the cases of interest of the method, is reduced to the resultant alone $[R_j, C^*]$ applied at any point $C^*$ on the central axis $\chi_j$, or at the moment $M_j$ only, materialized by a pair of applied forces, lying in a plane normal to the vector $M_j$, in this case the Oxy plan.

A first typology of theoretically useful tools for the purpose of determining said particular system of fictitious reactions $T_{aijk,bijk,...,hijk,...,nijk}$, includes semi-empirical procedures, in which essentially fictitious reactions to be determined - such as the generic $T_{hijk}$, or some scalar variables that identify it - are assigned plausible tentative values, on which a subsequent summary equilibrium check is then carried out, with reference to the complex of acting active forces; subsequent variations to said assigned values, subsequently becoming necessary in order to reach the equilibrium itself, assuming that the procedure converges to a solution.

A second type of tools useful for determining the particular system of fictitious reactions $T_{aijk,bijk,...,hijk,...,nijk}$ are successive approximation algorithms, implemented on automatic calculation routines, which generally have a more sophisticated and efficient architecture than previous ones. Using these algorithms, on a known, loaded, hyperstatic structure, the system of constraint reactions to be determined is initialized and then brought to convergence through successive relaxations and/or tensioning, performed by the algorithm in each iteration, and on a subset of said reactions, until a satisfactory overall equilibrium is reached between the set of reactions themselves and the active forces acting on the structure. An example of such successive approximation algorithms is the well-known Cross algorithm.

Based on recent developments in computer science and the availability of related applications, the resolution of the equilibrium of the piece P - which the method here aims to find, when it is subjected to the system of forces exerted by the tools - can also be performed by artificial intelligence software, to which the problem data and the desired results have been indicated.

The use of the above mentioned types of algorithms, for the resolution of the equilibrium of the piece that is being sought here, would fall within the scope of protection of the present invention, which in fact is general with respect to how a system of reactions is determined, in particular a system of fictitious reactions such as the $T_{aijk,bijk,...,hijk,...,nijk}$ already seen above.

In any case, an original set of geometric/analytical calculation procedures is taught here, which lead to an exact determination of particular systems of fictitious reactions that are being sought.

In the following, the operations referred to will be related to the same, albeit generic, processing time $t_j$.

Furthermore, identify the free variables $\alpha, \beta, ..., \tau, ... \omega$, by valuing which the problem is determined, the generic k-th set of arbitrary values $\alpha_k, \beta_k, ... \tau_k, ... \omega_k$ attributed to them and to which reference will be made, will be the one indicated from time to time, or the same one, in relation to the fixed processing time $t_j$ and to the fixed i-th combination of reaction areas, so that also the subscript $k$ may sometimes be implied.

Based on this, the particular system of fictitious reactions $T_{aijk,bijk,...,hijk,...,nijk}$ it may be briefly indicated as $T_{a,b,...,h,...,n}$, and the reaction areas on which they are intended to act may be briefly indicated as the set $10_{a,b,...,h,...,n}$; similar considerations also apply to other parameters or quantities.

In carrying out the method according to the invention, a procedure is carried out which solves the case - recurring in the method - in which a straight line $\chi$ is the central axis of the forces applied by the tools, while the straight line r they are made by the straight line of action a of the fictitious reaction $\underline{T}_a$ which is virtually applied in the center of gravity $V_a$ of the suction cup 10a.

Fig. 8 illustrates the case of the calculation relating to a procedure for solving the case, useful in the case where a straight line $\chi$ is the central axis of the forces applied by the tools, while the place of a straight line *r* they are made by the straight line of action a of the fictitious reaction $\underline{T}_a$ which is virtually applied in the center of gravity $V_a$ of the suction cup $10_a$.

In the program that translates the method, for example, to find the point H where two lines meet, it is advantageous to have a common, basic subroutine for the numerical processing of linear systems, matrices, and equations, particularly one capable of distinguishing between determinate, indeterminate, or impossible systems. Using this subroutine can be advantageous for managing various secondary operations that may occur-depending on the different choices made during the computer translation-in the implementation of the method. A subroutine for the numerical resolution of simple equations in one unknown can also be useful.

A further useful subroutine, which can be found in libraries for mechanical programming, is aimed at operations that often occur between two or more applied vectors, whose lines of action concur at a point H, proper or improper.

However, writing such a subroutine, to effectively manage the operations indicated below, can be achieved without difficulty, by translating the method into computer software, with the aid of the formulas indicated here.

A first operation, which is intended to be analytical, is the composition of two or more vectors; these, being in any case concurrent in the plane at a point H, proper or not, require a trivial calculation, which does not require further indications here.

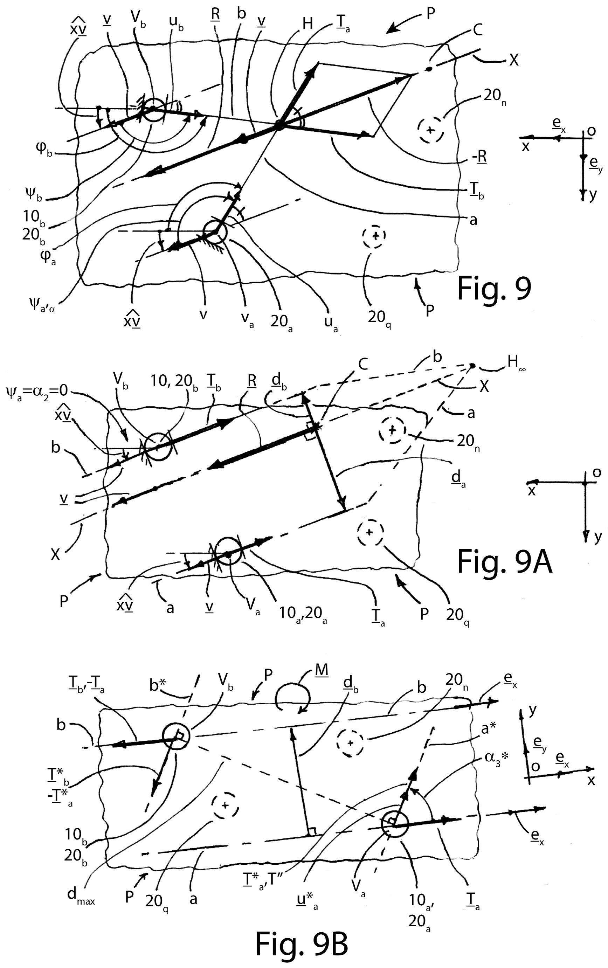

A second operation, in fig. 9, is the decomposition, in a point H of a straight line $\chi$, and according to two assigned directions, of a given vector $\underline{R}$, oriented according to a unit vector $\underline{in}$ spiraling along the same straight line $\chi$.

With this decomposition we analytically search for two applied vectors $\underline{T}_a$ and $\underline{T}_b$, flowing along two respective distinct straight linesaand b, also incident on said point H, just as in fig. 9, or improperly as in fig. 9A.

If the point H is improper, fig. 9A, the lines a, a, *b,* $\chi$, are parallel to each other; in the case of given reciprocal distances, the distribution of the vector $\underline{R}$ in the two vectors $\underline{T}_a$ and $\underline{T}_b$ parallel to it, is obtained elementary with the lever rule, that is by imposing the equilibrium of the moments of the $\underline{T}_a$ and $\underline{T}_b$ with respect to a pole chosen on the straight line $\chi$, as well as with a translation equilibrium along the straight line $\chi$, expressed by

$$\underline{T}_a + \underline{T}_b + \underline{R} = 0.$$

The second operation now illustrated solves the problem, discussed further on, of the balance of the piece when only two VE suction cups are assumed as reaction areas.

A third operation, still recurring in a point H located on the line of action $\chi$ of a given vector R, oriented by means of a unit vector v spiraling along the given line $\chi$, concerns the analytical search for the applied vector$\underline{T}_a$= $T_a$ $\underline{in}_a$, having unit vector $\underline{in}_a$ known and expiring along a straight line a given and incident the straight line $\chi$ in said point H, proper or improper, so that the vector sums $\underline{R}'$=($\underline{R}$ +$\underline{T}_a$), which is applied at point H, spirals along a further straight line $\xi$, assigned in the bundle of center H, and oriented by a unit vector $\underline{In}$.

In the physical reality in which the method operates, the vector $\underline{T}_a$ represents the fictitious reaction exerted by the reaction area $10_a$, whose line of action a evidently passes through the center of gravity $V_a$ of the same area, and has a slope fixed a priori via a value assigned to a free variable.

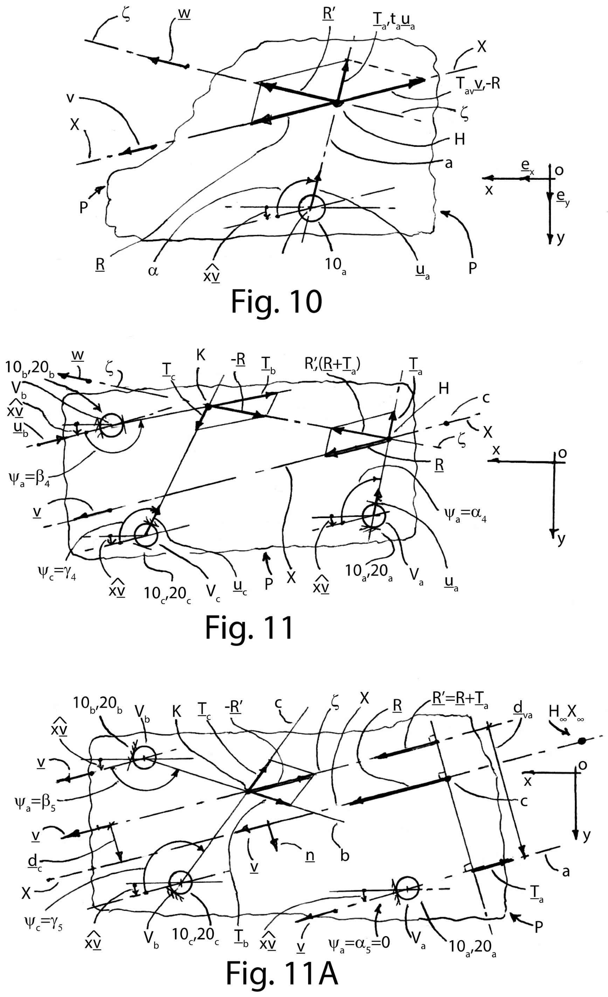

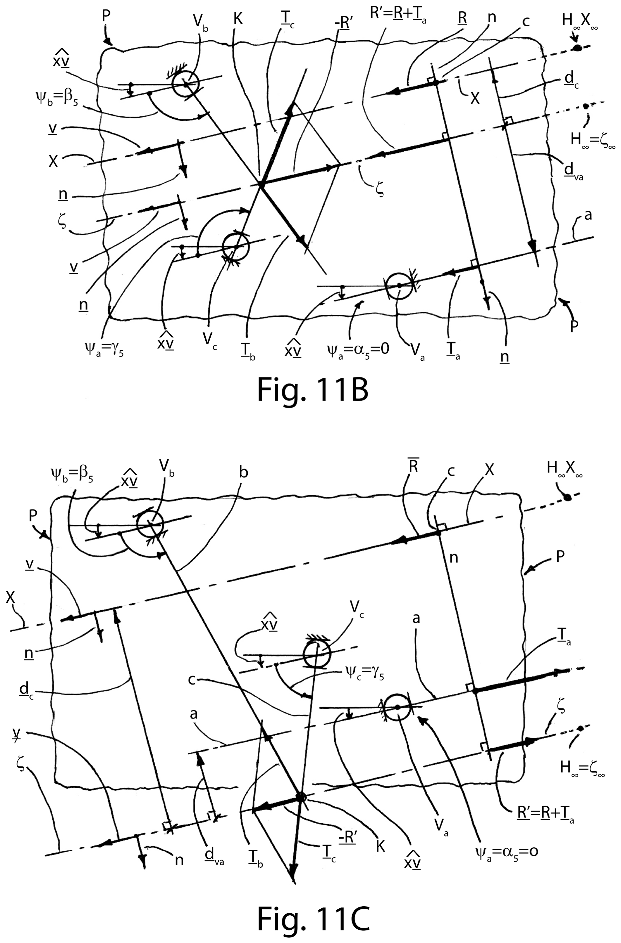

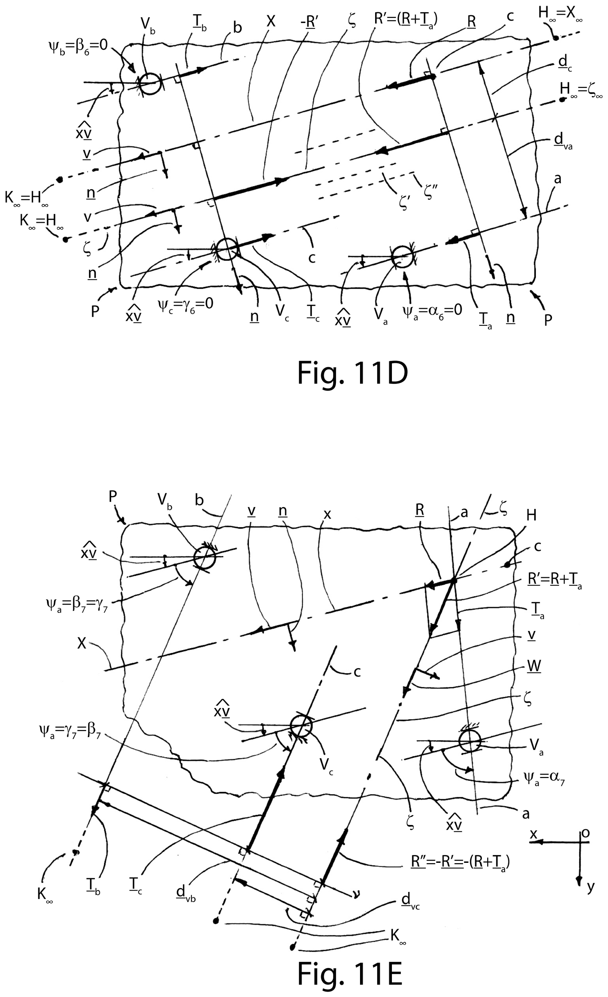

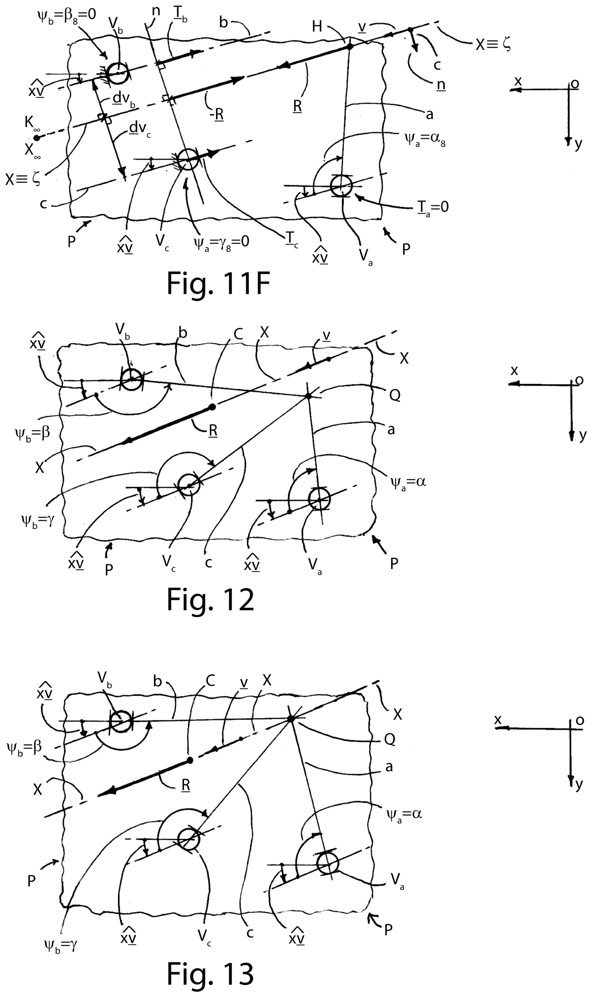

To operate in this case, fig.10 and fig.11, Here too, it is sufficient to use a change-of-basis matrix, proceeding in a formally identical way to the previous case.

Here too, fig. 11A, if the point H is improper, the linesa, $\chi$, $\xi$, are parallel to each other, since they must all pass through the point H; in the case of given reciprocal distances, the analytical determination of the vector $\underline{T}_a$ so that the vector ($\underline{R}$+$\underline{T}_a$), called $\underline{R}'$, has its line of action on the straight line $\xi$, is obtained with the lever rule alone, that is by imposing the equilibrium between the known moment of the vector $\underline{R}$, and the moment of the unknown vector $\underline{T}_a$, with respect to a pole chosen on the straight line $\xi$.

Finally, in addition to implementing subroutines of the type mentioned above, to avoid introducing systematic errors in the results, the computer translation of the method requires particular attention to the conventions of the + and - signs assigned to the variables appearing in the calculations, as well as to the tolerances to be set on zero tests, or on the tests of equality between two calculated quantities, which is equivalent to a zero test on their difference. Numerically, in fact, expressing the nullity of a quantity is equivalent to verifying that its absolute value is less than a positive number, which should be set smaller the better the approximation one wishes to operate with. Therefore, even for zero and equality tests, it is advantageous to use dedicated subroutines.

With a *toolbox* including the subroutines of the type seen above, and introducing the previous theoretical premises, the method can actually be implemented, for which the instructions below are provided so that an expert programmer can proceed with a computer transcription suitable for implementing the operations envisaged by the method itself.

It is now illustrated here how to determine that particular system of fictitious reactions $\underline{T}_{aijk,bijk,...,hijk,...,nijk}$ which balances the action of the forces exerted by the tools on the piece, which are summarized by the resultant [R,C] (with it line of action along the central axis $\chi$), or from the resulting moment $\underline{M}$ with respect to an assigned pole. This particular system is also referred to here as $\underline{T}_{a,b,...,h,...,n}$, as already mentioned, since it is irrelevant which of the processing times $t_j$ is considered here; as is equally disregarded as to which other quantities pertaining to the indices *i,j,k,* are considered here. Even in the figures, for a more immediate understanding, many indices have been omitted.

Within the method taught and claimed here, the number of reaction areas $10_{a,b,...,h,...,n}$ which can be selected is free, and they constitute in any case a subset of the support areas $20_{a,b,...,q,...,n}$ on which the piece was placed.

It is explicitly noted that the results of Statics, which will be indicated below and obtained by applying the method, are essentially projective invariants, in the sense that - save for particular exceptions - they are essentially conserved regardless of whether the lines of action along which the forces act meet at proper or improper points, which from a projective perspective, is completely irrelevant. For this reason, in the remainder of this description, we will sometimes speak generically of points of intersection of lines, even without specifying the proper or improper nature of said points.

According to the method object of the invention, it is necessary to solve an equilibrium problem, isostatically, therefore by finding out what the two fictitious reactions $\underline{T}_a$ and $\underline{T}_b$ should be, which, applied in the centers of gravity $V_a$ and $V_b$ of the two selected suckers $10_a$ and $10_b$, and under some conditions preset on certain free variables, virtually balance said resultant R.

In one embodiment of the method, a particular choice of the four unknown scalar parameters that identify the two vectors $\underline{T}_a$ and $\underline{T}_b$ is examined here, applied at points $V_a$ and $V_b$. While the method analytically handles such scalar parameters by means of the *tools* implemented in the subroutines introduced above, this particular choice brings the problem back to a classic graphical scheme and to well-known principles of statics, here in particular to the so-called three-force problem, illustrated in fig. 9 and fig. 9A.

In fig. 9 and fig. 9A, the straight line $\chi$ is the line,

analytically known on the basis of the elements already exposed, along which the resultant [R,C] of the forces exerted by the tools, with $\underline{R}=R\underline{v}$; that is, $\chi$ is the central axis of those forces, v being a chosen unit vector that agrees with the resultant $\underline{R}$, which is also known, and which therefore orients the straight line $\chi$.

The points $V_a$ and $V_b$ are the known centers of gravity of the two reaction areas $10_a$ and $10_b$ select from the areas for support $20_{a,b,...,q,...,n}$, with the condition that said centers of gravity do not belong to said straight line $\chi$.

The vectors $\underline{T}_a$ and $\underline{T}_b$, to be determined, are the fictitious tangential reactions that said suckers $10_a$ and $10_b$ must generate at points $V_a$ e $V_b$, by virtue of the applied depression, to virtually ensure the equilibrium of the piece under the action of the resultant [R,C] of the workforce.

The following parameters $\varphi_a, \varphi_b, T_a, T_b$ are the four scalar parameters that are chosen here to identify the two applied vectors $\underline{T}_a=T_a\underline{u}_a$ and $\underline{T}_b=T_b\underline{u}_b$, where:

- $\varphi_a$ e $\varphi_b$ are the angles that unit vectors $\underline{u}_a$ and $\underline{u}_b$, of the vectors $\underline{T}_a$ and $\underline{T}_b$, respectively form with the positive direction of the x-axis; then the angles $\psi_a$ e $\psi_b$ are considered that the same versors $\underline{u}_a$ and $\underline{u}_b$ respectively form with the positive direction of the unit vector v of the straight line $\chi$, with $-\pi < \psi_a, \psi_b \leq$ e.g.

Since the oriented straight line $\chi$ of fig. 9 and fig. 9A forms the angle *xv,* known, with the positive direction of the x-axis, we have that, up to the angle *xv,* the angles $\psi_a$ and $\psi_b$ represent the inclinations $x\underline{u}_a$ and $x\underline{u}_b$ of said unit vectors with respect to the positive direction of the x-axis, with the result that $\varphi_a = x\underline{u}_a = \Psi_a+x\underline{v},$ and also $\varphi_b = x\underline{u}_b = \Psi_b+x\underline{v};$ - $T_a$ and $T_b$ are the components of the two fictitious reactions, respectively according to the two so-called unit vectors $\underline{u}_a$ ed $\underline{u}_b$.

The straight lines a and *b* - for brevity we continue to omit some of the previously mentioned subscripts - are lines drawn through the points $V_a$, and respectively $V_b$, and having the directions of the unit vectors $\underline{u}_a$ e $u_b$.

In order for the three applied vectors, the forces $\underline{R}, \underline{T}_a, \underline{T}_b$, are in equilibrium with each other, so that the determination of the two applied vectors has a solution $\underline{T}_a$ and $\underline{T}_b$ unknowns that balance the resulting date $\underline{R}$, it is necessary and sufficient that the three vectors concur at the same point H, and that their vector sum is zero, or that each of the three vectors is equal and opposite to the sum of the other two, the point H therefore having to also belong to the straight line $\chi$.

To satisfy the first condition, since the angle *xv* is to be considered given, the angle $\psi_a$ is assumed as a free variable $\alpha$, among the four aforementioned parameters, that is it is set $\Psi_a=\alpha$, attributing to $\alpha$ a value $\alpha_1$ physically plausible, included in the interval $]-\pi, \pi]$.

The other three parameters mentioned remain determined by the resolution of the three equilibrium equations mentioned above, and are functions of the numerical choice $\alpha_1$ made for the angle $\psi_a$, made free variable $\alpha$.

It is important to note that choosing the angle $\psi_a$ as a free variable $\alpha$ and assign to it a certain value $\alpha_1$, immediately determines a consequent value for the angle $\psi_b$, then $\varphi_b$, the two strainght lines a and b in fact having to meet at a point H on the central axis $\chi$.

The numerical valorization $\alpha_1$ of the free variable $\alpha$, then determine the straight line a of the plane, and consequently the straight line b, directions according to which only the respective trolley-type constraints, placed at points $V_a$, $V_b$. In other words, for each of the two reaction suction cups, for example suction cup $10_a$, and *the* same for the suction cup $10_b$, the method investigates the reaction capacity in a single fixed direction for that reagent suction cup $10_a$, among all possible directions of the beam of center $V_a$, finding a relative reaction for that direction $\underline{T}_a$, called fictitious. Afterwards, in accordance with the heuristic approach of the method, it is stated that, even in the absence of any other reaction capacity of each suction cup (which in reality is always present), the only fictitious reactions $\underline{T}_a$ and $\underline{T}_b$ thus determined, they guarantee the desired equilibrium of the piece subjected to the acting working forces, the latter being summarized here by the sole resultant [R,C], or in other cases from the moment resulting only $\underline{M}.$

The behavior as a trolley-like constraint assumed by the method to find the fictitious reaction on each of the reacting suction cups, for example on said suction cup $10_a$ in its center of gravity $V_a$, is to be understood in the sense that the direction of the totally prohibited movement of the trolley coincides with the aforementioned straight line a, while the direction of free sliding of the trolley is the one normal to said straight line a.

Now according to Fig. 9, for each value of $\alpha_1 \neq$ p e $a_1$ # 0, the straight line a intersects the central axis $\chi$ at a proper point H, through which the straight line must also pass b, the angle $\Psi_b$ thus remaining determined by this last condition.

In the present hypothesis of two reacting suction cups, the choice of the four parameters listed above is therefore suitable for an effective graphic interpretation of the first equilibrium condition of three applied vectors $\underline{R}, \underline{T}_a, \underline{T}_b$, that is, their passage through the same point H.

It is easy to verify that the four parameters chosen above are also perfectly suitable for an effective graphical interpretation of the second equilibrium condition of the three vectors $\underline{R}, \underline{T}_a, \underline{T}_b$, according to which the resulting $\underline{R}$ must be equal and opposite to the vector sum, for example performed at point H, of the two remaining vectors $\underline{T}_a$ and $\underline{T}_b$.

The second operation mentioned above as such, and also implemented in the *toolbox* computer science of the method, in fact, concerns, at a point H, the decomposition of the vector $\underline{R}$ according to two lines identified by respective unit vectors $\underline{u}_a$ ed $\underline{u}_b$, to find the respective components $T_a$ and $T_b$ of $\underline{R}$ along said versors, which is exactly what it is looked for here.

After that, it is possible to immediately verify, even by using a graphical interface, that the value $\alpha_1$ chosen for the angle $\alpha$ is such that it makes the relation $\underline{R}+\underline{T}_a+\underline{T}_b$=0 true.

The choice of said four scalar parameters $\Psi_a$=a, $\Psi_b$, $T_a$, $T_b$, in the present hypothesis of two reacting suction cups, therefore appears completely suitable for a further graphical verification, via a dedicated interface, of the results already obtained analytically.

Already in the present case of the two reacting suction cups, a verification of the vector configuration via a graphical interface is particularly instructive for the machine operator. Thus, referring again to Fig. 9, if the angles $\Psi_a$=a and $\psi_b$ due to some error they turned out to be such as to make the lines a and b meet at a point Q now external to the central axis $\chi$, the system of three applied vectors $\underline{R}$, $\underline{T}_a$ and $\underline{T}_b$, could not be in equilibrium, since the moment of the remaining force, i.e. of the resultant [R,C] with respect to this point Q would never be zero. The graphic representation on the interface would in this case have highlighted an error, presumably occurred in the *data entry.*

In the case just seen of two reacting suckers whose fictitious reactions $\underline{T}_a$ and $\underline{T}_b$ must balance the resulting [R,C] non-zero of the labor forces, rather than the generic value $\alpha_1 \neq \{0,\pi\}$, is now attributed to the angle $\alpha$, that is, to the angle $\psi_a$ made free variable $\alpha$, the particular value $\Psi_a$= $a_2$= 0 as per fig. 9A .

This gives the advantage that the two fictitious reactions $\underline{T}_a$ and $\underline{T}_b$ requests to the two reacting suckers each have minimum intensity, since they frontally balance the resultant [R,C] of the workforce.

In this case, however, the graphical translation of the problem changes, since the point H of intersection between the central axis $\chi$ and the straight line a becomes improper, and coincides with the improper point $\chi\infty$ of the central axis $\chi$ itself. Consequently, also results $\psi_b$ =0, and the lines a and b both become parallel to the central axis $\chi$, where the two vectors sought also $\underline{T}_a$ and $\underline{T}_b$ become parallel to the resultant [R,C].

So, the choice to set $\alpha_2$= 0 is equivalent to setting: $\underline{u}_a$=$\underline{u}_b$=$\underline{v}$,, for the unit vectors, and is equivalent to considering $\psi_a$=0 and $\psi_b$=0, for angles, i.e.

$$\varphi_a = x\underline{u}_a = x\underline{v}, \text{ nd also } \varphi_b = x\underline{u}_b = x\underline{v}.$$

The programmer who computerizes the method, in the present case where it has been placed $\psi_a$ =$a_2$=0, and where therefore it holds $\underline{u}_a$=$\underline{u}_b$=$\underline{v}$ for the versors, it can be written the program leaving out the versors $\underline{u}_a$ and $\underline{u}_b$, and consider

$$f_a=\varphi_b=x\underline{v}$$

based on the equalities written above, to then advantageously express the $\underline{T}_a$ and $\underline{T}_b$ as components referring to the same unit vector $\underline{v}$ of the central axis $\chi$, placing

$$\underline{T}_a=T_a\underline{v} \text{ and } \underline{T}_b=T_b\underline{v}.$$

after which the equilibrium equations sufficient to solve the present case are the scalar equation of translation along the straight line $\chi$, according to which it turns $\underline{R}$:

$$R+T_a+T_b=0,$$

and the equilibrium of the moments with respect to any pole, which however - in the present case where $\alpha_2$=0, so H=$\infty$- it is useful if it turns out to be a generic point on the central axis, for example point C given by the formula seen previously to identify the central axis itself.

Finally, for said equilibrium of the moments with respect to said pole C, we have:

$$(V_a-C)\wedge(T_a\underline{v}) + (V_b-C)\wedge(T_b\underline{v}) = 0$$

from which, since the contributions of the distances parallel to the central axis are zero, we finally have

$$\underline{d}_{Va}\wedge(T_a\underline{v}) + \underline{d}_{Vb}\wedge(T_b\underline{v}) = 0$$

, so, scalarly

$$-d_{Va}T_a - d_{Vb}T_b = 0,$$

Where $\underline{d}_{Va}$ and $\underline{d}_{Vb}$ are the vector distances of the points $V_a$ and $V_b$ from the oriented line $\chi$, while $d_{Va}$ and $d_{Vb}$ are the corresponding signed scalar distances; and where the two negative signs have been left here to remind that in Geometry the convention on the direction of the vector product is, in a right-handed reference frame, contrary to the convention on the positive sign of the scalar distances of the points of the plane from an oriented line.

The last equation evidently translates the simple rule of the lever $d_{Va}T_a + d_{Vb}T_b = 0$ which, being immediately graphically evident, confirms that said four parameters $\Psi_a$=$a_2$=0, $\psi_b$, $T_a$, $T_b$, allow for easy and further verification of the analytical results, here in particular having assumed $\alpha_2 = 0$.

Seen as above the case of $\underline{R}\neq0$ with two reacting suction cups, now with reference to fig. 9B and still in the presence of two reacting suction cups, we examine here the case in which the system of working forces has a resultant vector $\underline{R}$ null (R=0), but resulting moment $\underline{M}$ non-zero. In this case, said system is equivalent only to the aforementioned moment $\underline{M}$=M$\underline{e}_z$, materialized by a pure pair having its axis normal to the Oxy plane, and whose value M, by a known property of pairs, does not depend on the pole. Furthermore, in the present case of $\underline{R}$=0, it is no longer possible to define the central axis $\chi$ of the working forces, as it results from the formula that defines this axis.

The aforementioned subroutines accompanying the method easily detect the case $R=0$, for example by means of a zero test performed on the calculation of the intensity of the same resulting vector $\underline{R}$.

In the present case of selecting only two reacting suckers, $10_a$ and $10_b$, to balance the moment alone $\underline{M}$ resulting from the work forces, it is necessary and sufficient that the two fictitious reactions $\underline{T}_a$ and $\underline{T}_b$ are themselves equivalent to a moment torque $-\underline{M}$, therefore that they have lines of action parallel to each other, and that one of them is the opposite of the other.

So the problem boils down to determining two relative fictitious reactions $\underline{T}_a$ and $\underline{T}_b=-\underline{T}_a$, equal and opposite, spiraling on respective parallel lines a and b, conducted for said points $V_a$ e $V_b$, and such as to balance the moment torque $\underline{M}=M\underline{e}_z$ created by the work forces. For example, by operating as shown below and with the geometric tools already illustrated, it is possible to analytically translate the determination of the only unknown component $T_a$.

Operationally, after selecting the two reagent suction cups $10_a$ and $10_b$, by any criterion, let us call here $\varphi_a$ and $\varphi_b$ the **inclinations with respect to the x-axis** of said lines a and b; said inclinations must be, as now clarified, such that the straight lines a and b are parallel to each other. Here too, as previously, it is advantageous that the inclination $\varphi_a$ of said straight line a with respect to the x-axis, let $\alpha$ be assumed as the free variable, setting $\varphi_a=a$.

Any numerical value can be assigned to this inclination $\alpha$, except those values for which the point $V_b$ is also belongs to the straight line a.

We first consider the case in which any numerical value of the angle $\varphi_a$ let the value $\alpha_3=0$, so the straight line a is parallel to the x-axis.

The procedure illustrated below essentially remains the same even for other directions chosen for the line a, that is, for other non-zero numerical values attributable to $\alpha$.

On the piece, the overall equilibrium equation of the moments around the point $V_b$ in this case it is written as $(V_a-V_b)^\wedge(\underline{T}_a\underline{e}_x) + M = 0$ or $-\underline{d}_{Vb}^\wedge\underline{T}_a\underline{e}_x + \underline{M} = 0$ where $\underline{d}_{Vb}$ is the distance vector of point $V_b$ from the oriented line a.

Finally, in a scalar way we have: $d_{Vb}T_a + M = 0$ in which $\underline{d}_{Vb}$ is the signed scalar distance of the point $V_b$ from the straight line a oriented by the versor $\underline{e}_x$, also expressible as $d_{Vb} = (V_b - V_a).\underline{e}_y = (y_b - y_a)$, since here the normal unit vector of the line a coincides with the versor $\underline{e}_y$.

From the overall equilibrium equation of the moments, given M in magnitude and sign, we obtain the value of $T_a$ in magnitude and sign which verifies the equation itself; after which we finally set

$$T_b = -T_a.$$

In a variant, instead of numerically placing $\alpha_3=0$, or any other numerical value for the slope $\alpha$, it is more advantageous to proceed by choosing $\varphi_a=\alpha$ for the free

variable, a numerical value $\alpha^*_3$ such that the straight line a*, indicated by dashes in fig. 9B, is orthogonal to the segment that joins the points $V_a$ and $V_b$, that is, such that for its versor $\underline{u}^*_a$ is $(V_b - V_a).\underline{u}^*_a = 0$.

In this configuration, the line b* having to be parallel to the straight line a*, the modulus of the distance between parallel lines a* and b*, arm of the couple $\{[\underline{T}^*_a,V_a],[-\underline{T}^*_a,V_b]\}$, takes its maximum absolute value, equal to

$$d_{max} = \|V_b - V_a\|.$$

If in this configuration, to the fictitious reaction module $\underline{T}^*_a$ the limit value permitted for it is assigned, which can be assumed to be equal to the same T value" for each of the two reaction areas $10_a$ and $10_b$, we have that the modulus of the reaction moment can be expressed overall by the two reaction areas $10_a$ and $10_b$, itself assumes its maximum value, equal to $T"d_{max}$.

In this way, based on the observations just seen, the program that implements the method in the processing unit 45 does not need to perform calculations, other than that of the value $d_{max} = \|V_b - V_a\|$ and the verification that the module of the moment $\underline{M}$ generated by the working forces, does not exceed the maximum moment $T"d_{max}$ overall expressible by the two reaction areas $10_a$ and $10_b$, then the verification of the inequality $\|\underline{M}\| \leq T"d_{max}$.

It then appears clear that it is not even necessary to calculate, nor use in the calculations, said numerical value $\alpha^*_3$ which makes the straight line a* orthogonal to the segment joining the points $V_a$ and $V_b$, since here this value only served to justify the procedure that leads to the final inequality just written.

Relatively to how the sign of the moment $\underline{M}$ exerted by the labor force influences the sign of the reactions that balance it, i.e. the fictitious reactions $\underline{T}_{a,b,...,h,...n}$, or the actual reactions $\underline{S}_{a,b,...,q,...n}$, it is observed that in the generic equilibrium equation where the moment appears in one member $\underline{M}$, and to the other member all said reactions which vectorially multiply the relative constant distance vectors, to make global equilibrium at $\underline{M}$, the change of sign at the resulting moment $\underline{M}$ in the first member, evidently causes the inversion of sign of each of said reactions, which without variation of the respective moduli, still satisfy the equilibrium equation.

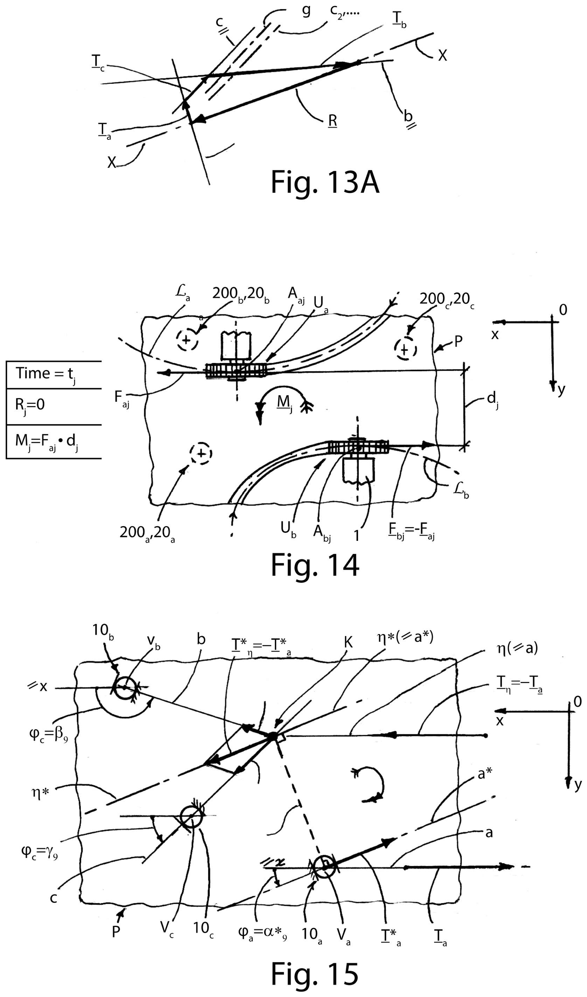

In usual processes, the event that in the same processing time $t_j$ if it has $\underline{R}_j=0$ ed $M_j\neq0$, can occur for example in the case fig. 14 in which two identical disc cutters act on the piece and are arranged with their axes parallel to the surface of the piece P to be engraved, and that at time $t_j$ considered to be operated according to processing parameters such as to exert equal and opposite forces on the piece, but having parallel lines of action, placed at a mutual distance $d_j$.

The value of the resulting moment, at the given time $t_j$, would have a modulus equal to $M_j = F_{aj}d_j$.

However, the case of a matrix of drill bits, arranged normally to the plane of the piece P, is different, where normally no moment is generated $\underline{M}$, as well as no resulting vector $\underline{R}$, since the tips of said matrix are normally operated in two opposite directions of rotation.

We will now examine, with the aid of figs. 11, 11A, 11B, 11C, 11D, 11E, the case of three suckers (reaction areas) $19_a, 10_b$ and $10_c$, selected among the various suckers $20_{a,b,...,q,...,n}$ which act as support areas, also here initially in the hypothesis of resulting $\underline{R}$ not null, or $\underline{R} \neq 0$, in formula.

Here too, it is necessary to solve an equilibrium problem isostatically, according to the method, and therefore to find out what the three fictitious reactions should be $\underline{T}_a$, $\underline{T}_b$ and $\underline{T}_c$ which, applied in the centers of gravity $V_a$, $V_b$, e $V_c$ of said three suckers $10_a$, $10_b$, and $10_c$, and under preset conditions on some free variables, virtually balance said resultant $\underline{R}$.

It is also noted here that, for the determination of the three vectors $\underline{T}_a$, $\underline{T}_b$ and $\underline{T}_c$, in the plane six scalar parameters are necessary and sufficient, for example the two Cartesian components of each of the two aforementioned vectors taken with respect to the usual plane reference system Oxy; or any other group of six parameters, independent of each other and suitable for uniquely identifying the three vectors $\underline{T}_a$, $\underline{T}_b$ and $\underline{T}_c$; of these possible groups of six parameters, there are many, and the choice among them is free. However, in the plane, only the well-known three equilibrium equations of the rigid body are available, two for translation and one for rotation. Having written these equations, for example in the reference frame Oxy, assuming the point O as the pole to calculate the moments, the problem of determining said three fictitious reactions appears numerically statically indeterminate three times, in the sense that of the six scalar parameters to be found, only three of them can be determined with the equilibrium equations, which however remain expressed as a function of the additional three parameters, which cannot be determined. To proceed and remove this indeterminacy, said additional three scalar parameters (any of the six mentioned) must therefore be identified as free variables of the problem, and a set of arbitrary numerical values must be freely assigned to them, compatible with the physical nature of the problem, which therefore makes these values assignable in a relatively simple manner, during the programming step.

The solution thus found, consisting of the three applied vectors (forces) $\underline{T}_a$, $\underline{T}_b$ and $\underline{T}_c$, evidently depends on the aforementioned set of numerical values attributed to the first three free variables, that is, on the first three scalar parameters chosen to determine it.

In the present case of three reacting suckers, the computer translation of the three aforementioned equilibrium equations, and the attribution of a set of arbitrary but plausible numerical values to the further three scalar parameters, are in principle sufficient to reach the solution, i.e. to completely determine the $\underline{T}_a$,

$\underline{T}_b$ and $\underline{T}_c$, which virtually balance the piece on the machine, provided they are compatible with the limit inequality.

In a further embodiment, a particular choice of the six unknown scalar parameters that identify the three vectors is considered $\underline{T}_a$, $\underline{T}_b$ and $\underline{T}_c$, to be applied at points $V_a$, $V_b$ and $V_c$. This particular choice brings the problem back to a classic graphical scheme and to well-known principles of statics, here in particular to the so-called four-force problem.

A graphical representation of the four forces problem for a generic case is given in Fig. 11, while for particular cases it is given in Figs. 11A, 11B, 11C, 11D, 11E.

The straight line $\chi$ is the known straight line along which the resultant [R,C] turns, with $\underline{R}=R\underline{v}$, of the forces exerted by the tools, that is, it is the central axis of those forces, v being a chosen unit vector that agrees with the resultant [R,C], which is also known, and which also orients the straight line $\chi$.

The points $V_a$, $V_b$ e $V_c$ are the known centers of gravity of the three reaction areas $10_a$, $10_b$, and $10_c$, selected among the areas for support $20_{a,b,...,q,...,n}$ with the condition that said centers of gravity do not belong to said straight line $\chi$.

The vectors $\underline{T}_a$, $\underline{T}_b$ and $\underline{T}_c$, to be determined, are the fictitious tangential reactions that said suction cups must generate at points $V_a$, $V_b$, and $V_c$, by virtue of the applied depression, to virtually ensure the equilibrium of the piece under the action of the resultant [R,C] of the workforce.

The following parameters $\varphi_a$, $\varphi_b$, $\varphi_c$, $T_a$, $T_b$, $T_c$ are the six scalar parameters that are chosen here to identify the three applied vectors $\underline{T}_a=T_a\underline{u}_a$ and $\underline{T}_b=T_b\underline{u}_b$, $\underline{T}_c=T_c\underline{u}_c$, where:

- $\varphi_a$, $\varphi_b$, e $\varphi_c$, are the angles that unit vectors $\underline{u}_a$, $\underline{u}_b$, and $\underline{u}_c$, of the vectors $\underline{T}_a$, $\underline{T}_b$ and $\underline{T}_c$, respectively form with the positive direction of the x-axis; as respective addends of the angles $\varphi_a$, $\varphi_b$, e $\varphi_c$, the angles $\psi_a$, $\psi_b$ e $\psi_c$ are then also considered that the same versors $\underline{u}_a$, $\underline{u}_b$ and $\underline{u}_c$ respectively form with the positive direction of the unit vector v of the straight line $\chi$, with

$$-\pi < \psi_a, \psi_b, \psi_c \leq \pi.$$

Since the oriented straight line $\chi$, for example in fig. 11, forms the angle $xv$, known, with the positive direction of the x-axis, we have that, up to the angle $xv$, the angles $\psi_a$, $\psi_b$, and $\psi_c$ represent the inclinations $\underline{xu_a}$, $xu_b$ and $x\underline{u}_c$ of said unit vectors with respect to the positive direction of the x-axis, it being true that

$$\varphi_a = xu_a = \psi_a + x\underline{v},$$

$$\varphi_b = xu_b = \psi_b + x\underline{v},$$

$$\varphi_c = x u_c = \psi_c + x\underline{v},$$

with $-\pi < \psi_a, \psi_b, \psi_c \leq \pi$; these three angles are assumed here as free variables , β, e Y, setting

$$\psi_a = \alpha, \quad \psi_b = \beta, - \quad \psi_c = \Upsilon;$$

- $T_a$, $T_b$, and $T_c$ are the components of the three fictitious reactions, respectively according to the three so-called unit vectors $\underline{v}_a$, $\underline{v}_b$ and $\underline{v}_c$:

The free variables α, β, Y are assigned relevant numerical values, to form for example the set of values $\alpha_4$, $\beta_4$, $\Upsilon_4$.

The sraight lines a, b and c are straight lines drawn through the points $V_a$, $V_b$, and respectively $V_c$, and having the directions of the unit vectors $\underline{v}_a$, $\underline{v}_b$, and respectively $\underline{v}_c$.

In order for the four vectors forces applied $\underline{R}$, $T_a$, $T_b$ and $T_c$ are in equilibrium with each other, that is, so that it is possible to determine the three applied vectors $T_a$, $T_b$ and $T_c$ unknowns that balance the given resulting $\underline{R}$, according to the well-known method of the four forces it is necessary that two of their first vectors are concurrent in a point H, and that two of their second vectors are concurrent in another point K. Then, considering an auxiliary line ξ passing through the points H and K, for the overall equilibrium it is then necessary and sufficient that the composition $\underline{R}'$ of the first two vectors performed at the point H, is equal and opposite to the composition $\underline{R}''$ of the second two vectors performed at the point K, and that the two opposite vectors $\underline{R}'$ and $\underline{R}''$ are both lying on the auxiliary line ξ, which joins the points H and K. In this way the vector composition of the four vectors $\underline{R}$, $T_a$, $T_b$ and $T_c$ is overall zero, so that from this relation - also in this case after introducing some free variables - it is possible to determine the unknown vectors $T_a$, $T_b$ and $T_c$.

Since the angles α, β, and $\Upsilon$ are free variables, in the computerization of the method it is necessary to take into account some limitations for their numerical valorization, in order to avoid incurring anomalous cases, compared to the ordinary case of fig. 11. For example, as in fig. 12, if those angles were assigned in such a way as to make the three lines meet *a, b* and *c* at a proper point Q external to the central axis χ, the four-force procedure would fail, since the system of the four applied vectors $T_a$, $T_b$, $T_c$, and $\underline{R}$ it could not be in equilibrium, since the moment of the resultant would not be zero [R,C] with respect to said point Q. The equilibrium problem would be impossible in that case, that is, it would not be possible to determine fictitious reactions $T_a$, $T_b$ and $T_c$ that keep the piece P in equilibrium. Fig. 12 shows the case in which said point Q is proper; but, with considerations similar to those just made, it is noted that the impossibility of solving the problem remains identically even in the case in which said point Q is improper, common to the straight lines *a, b* and *c*, external to the central axis χ.

Instead, referring to fig. 13, if the angles α, β, and $\Upsilon$ were assigned values such that the three lines would meet *a, b* and *c*, at a proper point Q belonging to the central axis χ, that is, such that the four lines *a, b, c,* and χ, form a proper bundle at the point Q, then the system of the four applied vectors $T_a$, $T_b$, $T_c$, and $\underline{R}$, could be in equilibrium in $\infty^1$ distinct ways. In fact, in fig. 13A it is graphically seen that, conducted through the extremes of the vector $\underline{R}$ the straight lines $a_{//}$ and $b_{//}$, respectively parallel to the lines a and b, there is certainly a straight line $c_{//}$, parallel to the straight line *c*, which closes the polygon of the four vectors $T_a$, $T_b$, $T_c$, and $\underline{R}$; where in reality, there are other lines that can close that polygon $\infty^1$, that is, all the lines parallel to the straight line c, indicate come *c1, c2,...,* in the same fig. 13A.

The uncertainty, in this case, can be easily eliminated, and thus a solution can be obtained, for example by fixing a numerical value for one of the components, for example $T_a$, or $T_b$, or $T_c$, indifferently.

The uncertainty just described in the present fig. 13, where the set of free variables has brought the three fictitious reactions to converge on the same point Q of the central axis χ, is found identically in fig. 11D, where the set of free variables brings the three fictitious reactions $T_a$, $T_b$, $T_c$, to converge again at a point on the central axis, but improperly of it. Further on, in the illustration of the specific case of fig. 11D, it is shown how the uncertainty can, also in that case, be eliminated.

In the above four-force procedure, of which Fig. 11 represents the ordinary case, if the first two applied vectors are considered to be the vectors $\underline{R}$ and $T_a$, assuming the angle $\psi_a = \alpha$ as the first free variable and assigning it a numeric value $\alpha_4$ physically plausible and different from the values 0 and π, the proper point H remains determined analytically, as well as geometrically, as the intersection between the lines χ and a, after which at point H the vector sum can be set $\underline{R}' = \underline{R} + T_a$, with which however it is not yet determined $T_a$.

For the two remaining vectors applied $T_b$ and $T_c$ the angles ψ are assumed respective $y_b = \beta$ e $\psi_c = \Upsilon$ as the second and third free variables, assigning them respective β values $_4$ e $\Upsilon_4$ physically plausible and different from each other; in this way a proper point K of intersection between said lines is determined b and c.

Now, having determined the auxiliary line ξ using the proper points H and K just found, and returning to the point H, we can determine the scalars $T_a$ and R', that is, the vectors $T_a$ and $\underline{R}'$, simply by imposing that said vector sum R' be extended along the auxiliary line ξ. The solution to this problem, which recurs in the method, has already been fully covered in the illustration of a previous subroutine, mentioned above as the third operation.

In this specific case, a direct method to determine the vector $T_a$, makes use of the above property, according to which in the plane two trolley-like constraints whose axes are concurrent at a point K, are equivalent to a virtual hinge located at the same point K. For the hypotheses already made, this is the case of the trolley-like constraints assumed to react at the points $V_b$ and $V_c$ of the areas for reaction $10_b$ and $10_c$, according to the directions of the straight lines *b* and *c*, which by construction have here a common proper point K.

Since the reactions $\underline{T}_b$ and $\underline{T}_c$, have zero moment with respect to the point K since by construction they themselves pass through the point K, from fig. 11 it is seen that it is sufficient to express that the moment of the unknown force $\underline{T}_a$ and the moment of the known force $\underline{R}$ they must be balanced around the virtual hinge K; from this balance the component T is then obtained$_a$ of strength $\underline{T}_a$, of which the versor $\underline{u}_a$ is already known along which the force $\underline{T}_a$ itself is stretched out.

Signed distances of point K from the straight line *a*, and respectively from the central axis χ along which the resultant turns [R,C] are calculated with the known formulas with which the *toolbox*.

The strength is determined $\underline{T}_a$, then the force is immediately calculated $\underline{R}'=\underline{R}+\underline{T}_a$, whose opposite $\underline{R}''=-\underline{R}'$ is to be decomposed at the point K along the lines b and c competing therein, to obtain the further two scalar unknowns $T_b$ e $T_c$ of the problem.

Analytically, but still following the geometric scheme of fig. 11, at point K the vector must be considered $\underline{R}''=-\underline{R}'$, which is then broken down into the directions of the unit vectors $\underline{u}_b$ and $\underline{u}_c$, by means of the procedure which has already been developed above from an analytical point of view, under the name of second operation.

It should be noted that, analytically following the graphical procedure of the four forces indicated above, with the assignment of numerical values to the three free variables $\psi_a=a$, $\psi_b=\beta$, and $\psi_c=\Upsilon$, the complete analytical determination of the three fictitious reactions has been obtained $\underline{T}_a$, $\underline{T}_b$ and $\underline{T}_c$, which had to be determined. In fact, this graphical procedure ultimately provides two vectors $\underline{R}'$ and $\underline{R}''$ equal, opposite, and on the same line of action $\underline{\xi}$, which proves that any analytical translation must be equivalent to writing the two scalar equilibria for the translation, summarized in $\underline{R}+\underline{T}_a+\underline{T}_b+\underline{T}_c=0$ or $(\underline{R}+\underline{T}_a)=-(\underline{T}_b+\underline{T}_c)$, and in rotational equilibrium.

As in the case of the two suction cups, to better understand the method, it is emphasized here again that the identification of the three angles $\psi_a=a$, $\psi_b=\beta$, and $\psi_c=\Upsilon$, as free variables of a problem with six scalar unknowns, and the assignment to them of three relative plausible values which immediately determine the points H and K, is geometrically equivalent to fixing the straight lines *a*, *b*, and *c* of the plane according to which, and exclusively, the trolley-type constraints can react which, according to the method, are hypothesized in the centers of gravity $V_a$, $V_b$, and $V_c$ of the areas for reaction $10_a$, $10_b$, and $10_c$.

In other words, for each of the reaction suction cups, for example suction cup $10_a$, and *the same* for the suckers $10_b$ and $10_b$, with the consideration of the trolley-type constraints positioned therein according to assigned reaction directions, the method goes to evaluate the reaction capacity in a single fixed direction for that reacting suction cup (area), among all the possible directions of the beam of center $V_a$, finally finding, for that direction, a relative reaction $\underline{T}_a$, called fictitious. Afterwards, in accordance with the heuristic approach of the method, it is stated that, even in the absence of any other reaction capacity of each other suction cup other than the three selected (a capacity which in reality is always present), the only fictitious reactions $\underline{T}_a$, $\underline{T}_b$ and $\underline{T}_c$ thus determined, they guarantee the desired equilibrium of the piece subjected to the acting working forces, the latter being summarized by their resultant $\underline{R}$, or from their resulting moment $\underline{M}$.

The choice of said six scalar parameters $\alpha, \beta, \Upsilon, T_a, T_b, T_c$, even in the present hypothesis of three reagent suction cups, appears suitable for that further verification, possibly also by means of a graphic interface, of the results that the method analytically obtains with the instruments of the *toolbox* already seen.

In the case just seen of three reacting suckers, whose fictitious reactions $\underline{T}_a$, $\underline{T}_b$ and $\underline{T}_c$ must balance a resultant $\underline{R}\neq 0$ of the labor force, rather than the generic case $\alpha_4 \neq 0$ at $\alpha_4 \neq \pi$ already seen in fig. 11, we examine here in fig. 11A what consequences are entailed by attributing to the angle α (the first of the three free variables) the particular numerical value $\alpha_5= 0$ (similarly: $\alpha_5= \pi$) which can be set by the programmer.

With this choice we have the probable advantage that the parallelism of the resultant $\underline{R}$ with the fictitious reaction $\underline{T}_a$, leads to obtaining a reduced modulus of the latter.

In the graphic translation of this case, which however the method always treats analytically with the tools already seen in the aforementioned *toolbox,* the point H of intersection between the central axis χ and the straight line a becomes improper, H∞, and coincides with the improper point χ∞ of the central axis χ itself. Thus, also the vector $\underline{T}_a$ to be determined becomes parallel to the resultant [R,C].

The point K of intersection between the lines b and c instead, it remains a proper point, by virtue of the condition $\beta_5 \neq \gamma_5$ which is also maintained in this set $\alpha_5$, $b_5$, $c_5$, of values assigned to free variables.

The auxiliary line ξ, passing through the points H∞=x∞ and K, and to which a unit vector is associated $\underline{w}$, thus becomes the straight line parallel to the central axis χ passing through the given proper point K, and therefore also completely known.

In the computer-implemented embodiment of the method under consideration, which involves three reacting suction cups, with $\alpha_5=0$ (or $a_5=\pi$) e $b_5 \neq \gamma_5$, said versors $\underline{u}_a$ e $\underline{w}$ being both parallel to the versor $\underline{v}$ of the central axis χ, can advantageously use only said unit vector $\underline{v}$, and its normal unit vector $\underline{n}=\underline{e}_z \wedge \underline{v}$, to also orient straight lines a and ξ and to express the scalar components with sign $T_a$ and R', which are respectively extended on the lines a and ξ, as components referred to the same unit vector $\underline{v}$.

So, on the diagram in fig. 11A, and operating on point H∞ (improper), if the composition of parallel vectors $\underline{R}$ and $\underline{T}_a$ must constitute a system equivalent to the vector alone $\underline{R}'$ lying along the straight line ξ, it is necessary to express:

- for the translation: $\underline{R}'=\underline{R}+\underline{T}_a$ that is, using the versor-in: R'in=Rin+T_a in, while, for example, assuming the proper point K as the pole,
- for rotation around K: $(C-K)\wedge R+ (V_a-K)T_a= 0$, or $\underline{d}_c \wedge \underline{R} + \underline{d}_{Va} \wedge \underline{T}_a= 0$, where dc e $d_{Va}$ are the vector distances from the auxiliary line ξ which contains the point K, and respectively from any point C on the central axis χ, and from the center of gravity $V_a$ of the suction cup $10_a$.

Since everything is expressed by the same unit vector $\underline{v}$, the previous ones gradually become:

$$R' = R+T_a$$

$$-d_c R - d_{Va} T_a = 0$$

where dc e $d_{Va}$ are distances with sign, from which finally $T_a = (-d_c/d_{Va})R$ and $R'= R(1 - d_c/d_{Va})$.

Since a point K of the auxiliary line ξ is known here, the distances with sign dc and $d_{Va}$ they can be calculated, in addition to the formula already seen to set up the *toolbox,* even with the simplest expressions:

$$d_C = (C - K).\underline{n}$$

$$d_{Va} = (V_a - K).\underline{n}$$

The ratio $d_c/d_{Va}$ is naturally affected by the signs of the distances that appear there, so that it may turn out that the components $T_a$ and/or R' have the same or opposite sign to the sign of the R component.

Three different situations can be observed which take place depending on the geometric position that the point K, i.e. the auxiliary line ξ, assumes with respect to the strip of plane included between the given parallel lines χ and a. There is that:

- if the point K falls outside said strip of plane, closer to the straight line χ, as in fig. 11A, the vectors $\underline{R}$ and $\underline{T}_a$ they are contraverse, and it turns out $\|\underline{R}\| > \|\underline{T}_a\|$;
- if the point K falls inside said strip of plane, as in fig. 11B, then the vectors $\underline{R}'$, $\underline{R}$ and $\underline{T}_a$ are all equiverse, and it turns out

$$\|\underline{R}'\| = \|\underline{R}\| + \|\underline{T}_a\|;$$

- if the point K falls outside said strip of plane, but closer to the straight line *a*, as in fig. 11C, then the vectors $\underline{R}$ and $\underline{T}_a$ are still controversial, and it turns out $\|\underline{R}\| < \|\underline{T}_a\|$.

Once calculated the vector $\underline{R}'$ with the previous formulas, to have the fictitious reactions $\underline{T}_b$ and $\underline{T}_c$ at point K, it is sufficient to recall from *toolbox* the second operation illustrated above, which breaks down the vector $\underline{R}''=-\underline{R}'$ in the two fictitious reactions $\underline{T}_b$ and $\underline{T}_c$ expiring according to the two given lines *b* and *c*, which in fact meet by construction at point K.

After that, all the fictitious reactions $\underline{T}_a$, $\underline{T}_b$ and $\underline{T}_c$ thus found, they can be subjected to the comparison provided by the limit inequality, which can also be called as a subroutine, to be accepted; or rejected, giving rise in this case to a subsequent search for fictitious reactions that are instead compatible with the limit inequality, possibly assuming a different combination of reaction areas, or attributing a different set of values to the arbitrary variables, but essentially repeating the formal operations already seen.

A particular, but not anomalous, case is in fig. 11D; it is obtained from the previous case, where was already $\alpha_5= 0$ (or similarly $\alpha_5 = \pi$), releasing the condition $\beta \neq \gamma$, thus assuming here for the free variables α, β, and γ the set of values: $\alpha_6= b_6= c_6= 0$ (or similarly $\alpha_6= b_6= c_6= \pi$).

The straight lines *a*, *b* and *c* in this way they all become parallel to the central axis χ, while both the point H and the point K, through which the auxiliary line ξ passes, go to infinity.

In the present case, the two conditions for the passage of the straight line ξ through the distinct points H and K, being now H=K=χ∞, as now clarified, are reduced to the sole condition of passage through the improper point χ∞ (unique) of the central axis, where therefore the problem now has seven scalar variables to determine, and no longer six, as in the cases already examined.

The problem is related to the previous case, as soon as among the $\infty^1$ straight lines ξ', ξ",... of the improper bundle through the point H∞=K∞=x∞, that is, between the $\infty^1$ lines parallel to the central axis χ, let any one of them be taken as the auxiliary line ξ. This choice is essentially equivalent to assigning a value to a further free variable, which immediately brings the number of scalar parameters of the problem back to six, which is then solved with the same analytical tools already used at the point H=∞ seen in the previous case, therefore substantially with the lever rule.

The seventh free variable mentioned above can be in this case the $T_a$ component of the fictitious reaction $\underline{T}_a$, which evidently is equivalent, by the lever rule on the point H∞, to assign the auxiliary line ξ in the bundle of $\infty^1$ straight lines ξ', ξ",... parallel to the central axis x.

In another further case, it is presented in fig. 11E, assuming for the above mentioned free variables α, β, and γ another set of values $\alpha_7$, $b_7$, e $c_7$, such that, differently from the previous values, the result is: $\beta_7= c_7$ e $a_7 \neq 0$ (and similarly $\alpha_7 \neq \pi$), and furthermore $\alpha_7 \neq b_7$ e $a_7 \neq$

c7.

In this way the lines b and c become parallel to each other, so that the intersection point K of them goes to infinity, precisely in the improper point K∞ common to the straight lines b and c, while the straight line a meets the central axis χ at a point H which is still proper. This point, together with the aforementioned improper point K∞, determines the auxiliary line ξ, which therefore turns out to be the line parallel through H to the lines b and c, but which is no longer parallel to the central axis χ.

At point H, the composition of the unknown fictitious reaction $\underline{T}_a$ with the resulting [R,C] to give a vector $\underline{R}'$ extended along the auxiliary line ξ, is set analytically by recalling the routine of the aforementioned third operation already described above.

The vectors are thus determined $\underline{T}_a$ ed $\underline{R}'$, operating ideally on the improper point K, but practically on any straight line v normal to the auxiliary straight line ξ, one can decompose the vector R"=-R' into the two vectors parallel to it $\underline{T}_b$ and $\underline{T}_c$, simply applying the lever rule, the arms being the distances with sign $d_{Vb}$ and dvc, given by

$$d_{Vb}= (In_b - H).\underline{n}$$

$$d_{Vc}= (In_c - H).\underline{n}$$

and taken as usual with respect to the auxiliary line ξ, now oriented by its own versor $\underline{w}$ and its normal unit vector $\underline{v}$, which are here distinguished from the versors $\underline{v}$ and $\underline{n}$ of the central axis χ. Also the components $T_b$ e $T_c$, it is agreed here that they are considered positive or negative, according to whether the vectors $\underline{T}_b$ and $\underline{T}_c$ are equivalent or controversial to the versor $\underline{w}$ of the auxiliary line ξ.

An anomalous case appears in Fig. 11F, if we assume for the above mentioned free variables α, β, γ, a set of values $α_8$, $b_8$, e $c_8$, such that it is:

$$b_8= c_8= 0 \text{ (or similarly } β_8= c_8= π),$$

$$e\ a_8≠ 0 \text{ (or similarly } α_8≠ π).$$

In this anomalous case, the lines b and c both become parallel to the central axis χ, so here too the point K of intersection of them goes to infinity and becomes the improper point K∞, coinciding with the improper point χ∞ of the central axis χ and of the lines b and c. The straight line a, instead, meets the central axis χ still at a specific point H.

At this point H, the composition of the unknown fictitious reaction $\underline{T}_a$ with the resulting [R,C], is still carried out analytically by means of the aforementioned third operation, and should generate a vector $\underline{R}'$ stretched along the auxiliary line ξ. But the latter, being identified by the points H and K=K∞, which both belong to the central axis χ, here turns out to coincide with the central axis χ itself, and therefore in order for the vector $\underline{R}'=\underline{R}+\underline{T}_a$ be as direct as the vector $\underline{R}$, it is necessary and sufficient that the vector is zero $\underline{T}_a$ which is added to $\underline{R}$. This fact transforms the present case into a case with only two reacting suckers, the $10_b$ and $10_c$, reagents with their respective fictitious reactions $\underline{T}_b$ and $\underline{T}_c$, having to be $\underline{T}_a$=0, as just noted. This is the anomaly of the case.

The solution, however, exists and, assuming the versor $\underline{n}$ of the central axis χ also for the straight lines b and c, it is provided by the pair of fictitious reactions $\underline{T}_b$ and $\underline{T}_c$ (being $\underline{T}_a$=0) which are obtained as already seen for the case of the two suction cups, therefore applying both an equilibrium to the translation along the central axis χ, and the lever rule on the improper point K∞=χ∞, or on any straight line n normal to the central axis χ, assuming the distances from the auxiliary straight line ξ on which the point K is found.

We thus have the two equations, in the components:

$$R+T_{b+}T_c=0,$$

$$d_{Vb}T_b + d_{Vc}T_c = 0$$

that solve the case.

The interest in highlighting, as done above, the special cases and the anomalous cases lies in the fact that when programming the method, appropriate precautions must be taken with respect to the former, while with respect to the latter, one must avoid assigning numerical values to the free variables that lead to them.

After illustrating the case in which it is $\underline{R}≠0$, with three reacting suction cups, it is examined here the case in which, always in the presence of three reacting suction cups, the system of work forces has the resultant vector $\underline{R}$ zero, but resulting moment $\underline{M}$ non-zero, in formulas $\underline{R}$=0 nd $\underline{M}≠0$.

The calculation procedure to be followed in this case, based on a geometric property of the constraints involved, can substantially be traced back to the procedure already illustrated for the case of the two suction cups in fig. 9B, in which it was also given $\underline{R}$=0 ed $\underline{M}≠0$.

Even in the present case, the workforce system is equivalent only to the aforementioned moment $\underline{M}=M\underline{e}_z$, therefore equivalent to a pure couple having axis normal to the Oxy plane, and whose absolute value $\|\underline{M}\|$, by a well-known property of pairs, does not depend on the pole. And also in the present case, being $\underline{R}$=0, it is not possible to define the central axis χ of the work forces.

Said subroutines created in support of the method and collected in the aforementioned *toolbox,* they easily detect when the case of $\underline{R}$=0, for example by a zero test performed on the intensity of the resulting vector $\underline{R}$ same.

Referring now to Fig. 15, in the present case of selection of three reacting suckers, $10_a$, $10_b$ and $10_c$

selected to balance the moment only $\underline{M}$ resulting from the work forces, to solve the problem it is necessary and sufficient that the three fictitious reactions $\underline{T}_a$, $\underline{T}_b$ and $\underline{T}_c$ are themselves equivalent to a moment couple $\underline{M}$, so the three-sided polygon of their vectors must be closed, in order to have $\underline{R}=0$, and furthermore that their overall moment, with respect to each pole, is $\underline{M}$.

The problem is substantially traced back to the case already illustrated in fig. 9B, where it was already $\underline{R}=0$ ed $\underline{M}\neq0$, in the presence of only two reaction areas. In the present case, one of the reaction areas is physically the reaction area $10_a$, while the other, corresponding to area $10_b$ of Fig. 9B, here is the virtual hinge placed at said point K. This makes sense, since said hinge, like a normal reaction area, at the point K constitutes a constraint capable of reacting with a fictitious reaction expiring along any of the straight lines of the beam centered at the point K itself.

A first part of the solution of the present case can therefore be carried out identically to what has already been seen in the case of Fig. 9B, considering corresponding:

- in fig. 9B the center of gravity $V_b$ of the reaction area $10_b$, here with the hinge placed at point K,
- in fig. 9B the straight line b, here with an auxiliary line $\eta$ passing through the point K,
- in fig. 9B the straight line b* normal to the line joining the points $V_b$ and $V_a$, here with a straight line $\eta^*$ parallel to the straight line a* which passes through the center of gravity $V_a$ and normal to the line joining the points K and $V_a$,
- in fig. 9B the fictitious reaction $\underline{T}_b$, spiraling along the straight line b (or the fictitious reaction $\underline{T}_b^*$, spiraling along the straight line b*), here with a fictitious reaction $\underline{T}_\eta$ spiraling along the auxiliary line $\eta$, (or with a fictitious reaction $\underline{T}_\eta^*$, spiraling along the auxiliary line $\eta^*$); the fictitious reaction $\underline{T}_\eta$ (the $\underline{T}_\eta^*$) having here a vector equal and opposite to the vector of the fictitious reaction $\underline{T}_a$ (or $\underline{T}_a^*$) explained by the suction cup $10_a$ in its center of gravity $V_a$.

Furthermore, various other geometric elements such as distances and angles, which in the two cases are correlated to the elements listed above, should be considered as corresponding to each other.

So, given that the auxiliary line $\eta$ (or the auxiliary line $\eta^*$) here the line replaces b of fig. 9B (or the straight line b*), the calculation of the related fictitious reaction $\underline{T}_\eta$, (or $\underline{T}_\eta^*$) is identical to the calculation of the fictitious reaction $\underline{T}_b$, (or $\underline{T}_b^*$), already seen in the case of fig. 9B, without variations.

The vector has been determined $\underline{T}_\eta$ (or $\underline{T}_\eta^*$), which applied in the virtual hinge K form with its opposite $\underline{T}_a$ (or $\underline{T}_a^*$) applied in $V_a$ a torque that balances the moment $\underline{M}=M\underline{e}_z$ of the working forces, in this case it is then necessary to add a further calculation part, compared to the case of fig. 9B. In fact, it is necessary, at point K, to distribute the fictitious reaction $\underline{T}_{or}=\underline{T}_a$, using the parallelogram rule, in the two fictitious reactions $\underline{T}_b$ and $\underline{T}_c$ which converge at the point K itself according to the straight lines b and c.

The vector relation, to be applied at point K on the given straight lines $\eta$, b, c, competing therein, is evidently the following breakdown:

$$\underline{T}_\eta=(\underline{T}_b+\underline{T}_c),$$

or, for the straight lines $\eta^*$, b, c:

$$\underline{T}_\eta^*=(\underline{T}_b^*+\underline{T}_c^*),$$

whose analytical translation has already been discussed.

The vectors $\underline{T}_b$ and $\underline{T}_c$ are thus determined, or $\underline{T}_b$ and $\underline{T}_c^*$, which represent the fictitious reactions of the reaction areas $10_b$ and $10_c$; Fig. 15 shows the decomposition of the vector alone $\underline{T}_\eta^*$ in the component vectors $\underline{T}_b$ and $\underline{T}_c^*$, but the vector decomposition $\underline{T}_\eta$ it would be performed in an identical manner.

In addition, to determine the three vectors $\underline{T}_a$, $\underline{T}_b$ and $\underline{T}_c$, six scalar parameters are evidently necessary and sufficient. As such, one can assume the parameters $\varphi_a$, $\varphi_b$, $\varphi_c$, $T_a$, $T_b$, $T_c$, the meaning of which, in complete analogy to the case of fig. 9B, is the following:

- $\varphi_a$, $\varphi_b$, e $\varphi_c$, are the angles that unit vectors $\underline{u}_a$, $\underline{u}_b$, and $\underline{u}_c$, of the vectors $\underline{T}_a$, $\underline{T}_b$ and $\underline{T}_c$, respectively form with the positive direction of the x-axis, where $-\pi < \varphi_a$, $\varphi_b, \varphi_c \leq \pi$.

In the present case, these three angles are assumed as free variables $\alpha$, $\beta$, and $\Upsilon$, by means of the positions:

$$\varphi_a=\alpha, \quad \varphi_b=\beta, \quad \varphi_c=\Upsilon;$$

- $T_a$, $T_b$, and $T_c$ are the components, with sign, of the three fictitious reactions respectively according to the three aforementioned unit vectors $\underline{u}_a$, $\underline{u}_b$ e $\underline{u}_c$.

Said free variables $\alpha$, $\beta$, $\Upsilon$ are assigned relevant numerical values, to form for example the set of values $\alpha_9$, $\beta_9$, $\Upsilon_9$, which therefore determine the straight lines a, b, c, traced for the points $V_a$, $V_b$, $V_c$, and along which the versors $\underline{u}_a$, $\underline{u}_b$, e $\underline{u}_c$ are directed.

Here too, if instead of a generic value of the angle $\varphi_a=\alpha_9$ the value $\varphi_a=\alpha_9^*$ is assume, for which the generic cited straight line a becomes the straight line a* normal to the line joining points K and $V_a$, we have the particular case already illustrated in fig. 9B; here we operate with the consequent set of values $\alpha_9^*$, $\beta_9$, $\Upsilon_9$, for the free variables.

Regarding the values of the free variables, it is noted that, for the point K to be proper, it is necessary and sufficient that $\beta_9 \neq \Upsilon_9 \pm \pi$.

Furthermore: to generate a moment about the point K, the line of action a of the first fictitious reaction $\underline{T}_a$ cannot contain the point K itself, and therefore the value $\alpha_9$ assigned to the first free variable $\alpha$ will have to respect this constraint, which analytically translates into the test relation

$$\underline{u}_a \wedge (K - V_a) \neq 0,$$

or, more simply

$$\underline{u}_a . (K - V_a) \neq \| K - V_a \| .$$

Therefore, the program that implements the method in the processing unit 45 does not need to perform the calculations reported here for the purpose of illustrating the procedure, other than the calculation of the value $d_{max} = \| K - V_a \|$ and the final verification of compliance with the limit inequalities on the areas $10_a$, $10_b$, $10_c$.

For the latter, it is a matter of verifying that the module $\| \underline{M} \|$ of the moment $\underline{M}$ generated by the working forces does not exceed the maximum moment $T''d_{max}$ overall expressible by the reaction area $10_a$ and from the virtual hinge placed at point K, using the inequality $\| \underline{M} \| \leq T''d_{max}$ The most difficult inequality to respect is generally the one on the reaction area $10_a$, which directly becomes $\| \underline{T}_a \| \leq T''$. In addition, it must be verified that, once the decomposition has been performed $\underline{T}_\eta^* = (\underline{T}_b^* + \underline{T}_c^*)$, also results in $\| \underline{T}_b^* \| \leq T''$, and $\| \underline{T}_c^* \| \leq T''$.

If the decomposition had been done instead $\underline{T}_\eta = (\underline{T}_b + \underline{T}_c)$, it must be verified that $\| \underline{T}_b \| \leq T''$, and $\| \underline{T}_c \| \leq T''$.

According to this procedure, it is not necessary to calculate or use in calculations said numerical value $\alpha_9^*$ which makes the straight line a* orthogonal to the segment joining the points $V_a$ and K, since said inclination $\alpha_9^*$ has only served here to justify the procedure that leads to the final inequalities just written for the moduli of the fictitious reactions, which represent the final synthesis of the problem of the equilibrium of the piece on three reaction areas, in the hypothesis of $\underline{R} = 0$ and $\underline{M} \neq 0$.

In case some inequality is not verified, and wanting to continue with the application of the method, the programmer will plan to adopt - either directly or through an algorithm - different sets of numerical values for the free variables, such as $\alpha_{10}$, $b_{10}$, e $\Upsilon_{10}$, in order to move the point K; or it will provide - here too directly or through an algorithm - the choice of a different set of three suction cups, among the given areas for supporting the piece $20_{a,b,...,q,...,n}$.

**Advantages**

An advantage of the method contained in the present invention is that it provides a final *output,* regarding the maintenance of the piece locking on the machine, in view of machining with tools.

Another advantage of the present invention is that the evaluation of the sufficiency of the workpiece clamping takes place virtually, therefore through a simulation, and completely precedes the physical execution of the machining.

A further advantage of the present invention is given by the fact that the method provides for the emission of signals, possibly also acoustic and/or optical, possibly aimed at preventing a process as initially programmed.

The present invention has been described for illustrative but not limitative purposes, according to its preferred embodiments, but it is to be understood that modifications and/or changes can be introduced by those skilled in the art without departing from the relevant scope as defined in the enclosed claims.

**Claims**

1. Prediction method of maintaining the clamping of a workpiece (P) made of wood, glass, marble, plastic, metal, composite materials, and the like, on clamping areas ($200_{a,b,...,p,...,n}$) of a machining machine (1),

   wherien said machine (1) comprises:

   one or more tools ($U_{a,b,...,g,...,n}$), capable of exerting in their respective use one or more work forces ($\underline{F}_{a,b,...,g,...,n}$), applied at respective points of action ($A_{a,b,...,g,...,n}$) of said piece (P); and
   a processing unit (45) suitable for handling data and programs, and for machine control during processing;

   wherein said method comprises the steps of:

   A. processsing a machining operation of said workpiece (P), to be performed on said machine (1), by means of a first program (L) executed by said processing unit (45), comprising operating parameters ($30_{a,b,...,s,...,n}$) of the machining operation, of geometric and/or kinematic type;
   B. placing said workpiece (P) on a plurality of support areas ($20_{a,b,...,q,...,n}$), identified by means of said processing unit (45) between said clamping areas ($200a_{b,...,p,...,n}$), to be processed according to said first program (L);
   C. acquiring, by calculation formulas and/or database, by means of said processing unit (45), one or more of said work forces ($\underline{F}_{a,b,...,g,...,n}$), and their respective action points ($A_{a,b,...,g,...,n}$) on said workpiece (P);

D. determining, by means of said processing unit (45), fictitious reactions ($\underline{T}_{a,b,...,h,...,n}$) to be applied tangentially on respective reaction areas ($10a_{,b,...,h,...,n}$), selected from said support areas ($20a_{,b,...,q,...,n}$), to balance said piece (P), subject to one or more of said work forces ($\underline{F}_{a,b,...,g,...,n}$), applied at respective action points ($A_{a,b,...,g,...,n}$);

E. checking, by means of said processing unit (45), whether each of said fictitious reactions ($\underline{T}_{a,b,...,h,...,n}$) determined for each of said respective reaction areas ($10a_{,b,...,h,...,n}$), is compatible with a related limit reaction ($T''_{a,b,...,h,...,n}$);

F. performing a machining of said workpiece, by means of said machine (1), according to instructions of said first program (L), or according to instructions of said first program (L), combined with updating instructions (AG), in particular issued by said processing unit (45).

2. Method according to claims 1, **characterized in that** said placement step B additionally comprises the following sub-step:

B1. generating, by means of an energy source (SG) connected to said machine (1), normal to each area of said plurality of support areas ($20_{a,b,...,q,...,n}$), respective clamping forces ($\underline{N}_{a,b,...,q,...,n}$), acting on said workpiece (P).

3. Method according to any one of the preceding claims, **characterized in that** said determination step D additionally comprises the following sub-steps:

D1. selecting, from said plurality of support areas ($20_{a,b,...,q,...,n}$), an i-th combination ($10ai_{,bi,...,hi,...,ni}$) of reaction areas, comprises at least two of said support areas ($20a_{,b,...,q,...,n}$);

D2. acquiring, relative to a j-th time ($t_j$) of the scheduled processing, a j-th arrangement ($\underline{F}_{aj,bj,...,gj,...,nj}$) of said one or more work forces ($\underline{F}_{a,b,...,g,...,n}$), and a corresponding j-th map ($A_{aj,bj,...,gj,...,nj}$) of the respective action points, between said action points ($A_{a,b,...,g,...,n}$);

D3. apply, preferably at the virtual level, to said piece (P):

- said j-th arrangement ($\underline{F}_{aj,bj,...,gj,...,nj}$) of one or more work forces, respectively, applied at the points of said j-th map ($A_{aj,bj,...,gj,...,nj}$) of action points; and/or
- a j-th system ($SE_j$) of forces, equivalent to said j-th arrangement ($\underline{F}_{aj,bj,...,gj,...,nj}$) of one or more work forces, respectively applied at the points of said j-th map ($A_{aj,bj,...,gj,...,nj}$) of action points;

D4. identifying one or more free variables ($\alpha,\beta,...,\tau,...,\omega$), to which assigning respective arbitrary values, to determine a particular system of said fictitious reactions ($\underline{T}_{a,b,...,h,...,n}$);

D5. assigning, to said one or more free variables ($\alpha,\beta,...,\tau,...,\omega$), at least one k-th set ($\alpha_k, \beta_k, ..., \tau_k, ..., \omega_k$) of arbitrary values,

D6. determining a particular system ($\underline{T}_{aijk,bijk,...,hijk,...,nijk}$), of said fictitious reactions ($\underline{T}_{a,b,...,h,...,n}$); which balances said piece (P), based on:

- said i-th combination ($10_{ai,bi,...,hi,...,ni}$) of reaction areas, and
- said j-th arrangement ($\underline{F}_{aj,bj,...,gj,...,nj}$) of one or more work forces, respectively applied at the points of said corresponding j-th map ($A_{aj,bj,...,gj,...,nj}$) of action points;
- said k-th set ($\alpha_k, \beta_k, ..., \tau_k, ..., \omega_k$) of arbitrary values,

which, in association, form a string of indices i, j, k, characteristic of said particular system of fictitious reactions ($\underline{T}_{a,b,...,h,...,n}$); and/or **in that** said selection sub-step D1, comprises the following sub-step:

D1.1. selecting:

- an i-th combination ($10_{ai,bi}$) of two reaction areas, selected from the possible simple class two combinations of said plurality of support areas ($20_{a,b,...,q,...,n}$);

or:

- an i-th combination ($10ai_{,bi,ci}$) of three reaction areas, selected from the possible simple class three combinations of said plurality of support areas ($20_{a,b,...,q,...,n}$).

4. Method according to the preceding claim, **characterized in that** it additionally comprises the following step:

G. repeatedly implementing, by means of said processing unit (45), one or more of the sub-steps D1, D2, D3, D4, D5, D6, operating, in the repetitions:

- with same, or different, i-hexime combinations ($10_{ai,bi,...,hi,...,ni}$) of reaction areas, and/or:

- with same, or different, j-hexima arrangements ($\underline{F}_{aj,bj,...,gj,...,nj}$) of said one or more work forces, respectively applied at the points of the corresponding j-hexima maps ($A_{aj,bj,...,gj,...,nj}$) of action points,
and/or:

- with same, or different, k-th sets ($\alpha_k$, $\beta_k$, ..., $\tau_k$, ..., $\omega_k$) of arbitrary values,

thereby determining or implementing, corresponding systems ($T_{aijk,bijk,...,hijk,...,nijk}$) of said fictitious reactions ($\underline{T}_{a,b,...,h,...,n}$), each **characterized by** a relative string of the i,j,k indices, proper to said one i-th combination, one j-th arrangement, and said one k-th set.

**5.** Method according to any one of claims 3 and 5, **characterized in that** said verification step E additionally comprises the following sub-steps:

E1. assigning respective limit values ($T''_{a,b,...,h,...,n}$) of intensities for said fictitious reactions ($\underline{T}_{a,b,...,h,...,n}$); related to said plurality of reaction areas ($10a_{b,...,h,...,n}$), specifically limit values ($T''_{ai,bi,...,hi,...,ni}$) for a said i-th combination ($10ai_{bi,...,hi,...,ni}$) of reaction areas;
E2. compare, at a given time $t_j$ of processing, the intensities of the fictitious reactions ($\underline{T}_{aijk,bijk,...,hijk,...,nijk}$) extracted from a said particular system ($T_{aijk,bijk,...,hijk,...,nijk}$) determined in the force of a said i-th combination and j-th processing time, with the limit value ($T''_{ai,bi,...,hi,...,ni}$) assigned to each reaction area of a said i-th combination ($10ai_{bi,...,hi,...,ni}$) of reaction areas,
said comparison step being favorable if, at the given processing time $t_j$, and for each reaction area ($10_{hi}$) of a said i-th combination ($10_{ai,bi,...,hi,...,ni}$) of reaction areas, there exists in said particular system a relative fictitious reaction ($T_{hijk}$) whose intensity is less than the limit value ($T''_{hi}$) assigned to said reaction area ($10_{hi}$).

**6.** Method according to any one of claims 3 - 5 and 6, **characterized in that** it additionally comprises the following steps:

H. applying a logic test that returns the true value if, for each of the times ($t_j$) of the scheduled processing, and relative j-hex arrangements of work forces ($F_{aj,bj,...,gj,...,nj}$), and j-hex maps ($A_{aj,bj,...,gj,...,nj}$) of respective application points, said comparing results in favorable; said logic test returning, otherwise, the false value;
I. emitting a computer signal (SI), by means of said processing unit (45), of type:

- positive, if said logic test turns out to be true;
- negative, if said logic test proves false.

**7.** Method according to the preceding claim, and according to any one of the preceding claims, **characterized in that**, having occurred the step I of issuing a negative type of information signal (SI), the method comprises the following steps:

J. modifying, through said processing unit (45):

- one or more values of said clamping forces ($\underline{N}_{a,b,...,q,...,n}$); and/or
- one or more values of the operating parameters ($30_{a,b,...,s,...,n}$), provided for performing the machining in said machine, in particular of a pass depth ($30_a$); and/or
- said i-th combination ($10_{ai,bi,...hi,...,ni}$) of reaction areas; and/or
- said k-th set ($\alpha_k$, $\beta_k$, ..., $\tau_k$, ..., $\omega_k$) of arbitrary values,

thereby obtaining modified input entities at least for said substep D6 of particularly determine;
K. implementing, by means of said processing unit (45), at least one of the preceding steps C, D, E, G, H, I, J and/or their sub-steps, assuming in them said modified entities, to obtain a positive information signal (SI) in the implementation of step I of issuing an information signal (SI).

**8.** Method according to the preceding claim, **characterized in that** following said step I with issuance of a positive computer signal (SI), said method additionally comprises the following step:
L. storing as suitable parameters by means of said processing unit (45):

- the values of said clamping forces ($\underline{N}_{a,b,...,q,...,n}$); and/or
- the values, relative to at least one time ($t_j$), of said operating parameters ($30_{aj,bj,...,sj,...,nj}$), present in said processing unit (45) following the generation of said positive computer signal (SI), including said suitable parameters in said update instructions (AG).

**9.** Method according to any one of the preceding claims, when dependent on claim 2, **characterized in that** the generation of said clamping forces ($\underline{N}_{a,2,...,q,...,n}$) is achieved by means of an energy source (SG) operating with fluidic, or electrical, or magnetic type energy, connected to said machining machine (1).

**10.** . Method according to any one of the previous claims, **characterized**

**in that** it comprises a remote peripheral unit (W), configured to process and/or store data, and
**in that** said processing unit (45) of said machine (1), exchanges data and/or codes with said remote peripheral unit (W), and/or has parts in common with it.

11. Method according to any one of the preceding claims, when dependent on claim 3, **characterized in that** said step of selecting an i-th combination $(10ai_{,bi,...,hi,...,ni})$ of reaction areas, and/or said step of identifying one or more free variables $(\alpha, \beta, ..., \tau, ..., \omega)$, and/or said step of assigning to said one or more free variables at least one k-th set $(\alpha_k, \beta_k, ..., \tau_k, ..., \omega_k)$ of arbitrary values, is performed by means of a preset algorithm in said processing unit (45), and/or by means of an artificial intelligence application, which exchanges data and/or codes with said processing unit (45) and/or with said remote peripheral unit (W), and/or is directly implemented in one of said units.

12. Method according to any one of the preceding claims, **characterized in that** said processing unit (45) processes and makes available data or codes suitable for enabling, in an appropriate video interface, a vector graphic representation of the forces acting on the workpiece (P), in at least one processing time $t_j$.

13. Machining machine (1) for a workpiece (P) made of wood, glass, marble, plastic, metal, composite materials, wherein said workpiece is clamped on substantially flat clamping areas $(200_{a,b,...,p,...,n})$ by respective clamping forces $(\underline{N}_{a,b,...,q,...,n})$ normal to said areas;

    one or more tools $(U_{a,b,...,g,...,n})$, operated in said machining machine, exerting in their respective use one or more working forces $(\underline{F}_{a,b,...,g,...,n})$, applied at respective points of action $(A_{a,b,...,g,...,n})$ of said workpiece (P);
    a processing unit (45) also being provided in said machining machine (1), suitable for data and program management, and machine control during processing,
    said machining machine (1) being **characterized in that** said processing unit (45) is configured to implement the steps of the method according to any one of the preceding claims.

14. Machining machine (1) according to the preceding claim,

    in that said clamping areas $(200_{a,b,...p,...,n})$ comprises a mechanical clamping device, particularly at least one clamp, or at least one presser; and/or

in that said fixing areas $(200_{a,b,...p,...,n})$ comprises
at least one suction cup (VE), and/or
at least one multifunctional floor zone (ZP) bordered by seals, fed by a vacuum-generating power source (SG);
wherein the value of said depression is modifiable, to change said clamping forces $(\underline{N}_{a,b,...,q,...,n})$, by adjustment of said power source (SG), and/or by selective tapping operated on the power supply of said at least one suction cup (VE), and/or of said at least one multifunctional plane zone (ZP).

15. Machining machine (1) according to any one of claims 13-14, **characterized in that** it comprises a video interface, suitable for displaying to an operator graphical vector representations of the forces acting on the workpiece (P), based on data and/or code exchanged with said processing unit (45).

$U_{a,b,\ldots,g,\ldots n,}$

$200_p, 20_q, 10_h, VE$

2

1

# Fig. 1

z

o

x

y

P

$200_a, 20_a, 10_a, VE$

$200_b, 20_b, 10_b, VE$

$200_n, VE$

2

1

$200_c, 20_c, VE$

# Fig. 1A

# Fig. 1B

# Fig. 2

Fig. 3

Fig. 4

Fig. 5

Fig. 5A

Fig. 5B

Fig. 6

Fig. 7

Fig. 8

EP 4 760 422 A1

Fig. 9

Fig. 9A

Fig. 9B

32

Fig. 10

Fig. 11

Fig. 11A

Fig. 11B

Fig. 11C

Fig. 11D

Fig. 11E

Fig. 11F

Fig. 12

Fig. 13

Fig. 13A

$$Time = t_j$$
$$R_j = 0$$
$$M_j = F_{aj} \cdot d_j$$

Fig. 14

Fig. 15

Europäisches
Patentamt

European
Patent Office

Office européen
des brevets

# EUROPEAN SEARCH REPORT

**Application Number**

EP 25 22 3646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/212942 A1 (RAYTHEON TECH CORP [US]) 6 October 2022 (2022-10-06)<br>* paragraph [0007] *<br>* paragraph [0036] *<br>* paragraph [0059] *<br>* paragraph [0069] - paragraph [0079] *<br>* paragraph [0086] - paragraph [0102] *<br>* paragraph [0108] - paragraph [0121] *<br>* paragraph [0135] *<br>----- | 1-15 | INV.<br>G05B19/18<br>B23Q1/03<br>B23Q1/44<br>B27C5/06<br><br>ADD.<br>B23Q3/16 |
| X | KAYA N. ET AL: "The Application of Chip Removal and Frictional Contact Analysis for Workpiece-Fixture Layout Verification",<br>THE INTERNATIONAL JOURNAL OF ADVANCED MANUFACTURING TECHNOLOGY,<br>vol. 21, no. 6, 1 March 2003 (2003-03-01), pages 411-419, XP093291347,<br>London<br>ISSN: 0268-3768, DOI: 10.1007/s001700300048<br>* 4- 4.2 *<br>----- | 1,2,9,13 | |
| X | EP 3 067 762 A1 (SIEMENS AG [DE]) 14 September 2016 (2016-09-14)<br>* paragraph [0026] - paragraph [0029] *<br>----- | 1,2,9,13 | **TECHNICAL FIELDS SEARCHED (IPC)**<br>G05B<br>B27M<br>B23Q<br>B27C |

The present search report has been drawn up for all claims

| Place of search | Date of completion of the search | Examiner |
|---|---|---|
| The Hague | 13 April 2026 | De Porcellinis, S |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..............................................................................................
& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 22 3646

This annex lists the patent family members relating to the patent documents cited in  the above-mentioned European search report.
The members are as contained in the European Patent Office EDP file on
The European Patent Office is in no way liable for these particulars which are merely given for the purpose of information.

13-04-2026

| Patent document cited in search report | | | Publication date | Patent family member(s) | | Publication date |
|---|---|---|---|---|---|---|
| WO 2022212942 | A1 | | 06-10-2022 | EP | 4168869 A1 | 26-04-2023 |
| | | | | US | 2024176322 A1 | 30-05-2024 |
| | | | | WO | 2022212942 A1 | 06-10-2022 |
| EP 3067762 | A1 | | 14-09-2016 | EP | 3067762 A1 | 14-09-2016 |
| | | | | WO | 2016142206 A1 | 15-09-2016 |

EPO FORM P0459

For more details about this annex : see Official Journal of the European Patent Office, No. 12/82